# EUROPÄISCHE PATENTSCHRIFT

(11) **EP 1 743 821 B1**
(45) Veröffentlichungstag und Bekanntmachung des Hinweises auf die Patenterteilung: **03.12.2008**
(21) Anmeldenummer: 04030030.3
(22) Anmeldetag: 18.12.2004
(51) Int. Cl.: B60T 13/66, B60T 17/22

(54) **Vorrichtung und Verfahren zur Steuerung einer elektropneumatischen Bremse mit Notbremsüberbrückungseinrichtung**
Device and method for controlling an electropneumatic brake system having a device for bypassing the emergency brake
Dispositif et méthode de réglage d'un système de freinage électropneumatique avec un dispositif à courte circuiter le frein d'émergence

(43) Veröffentlichungstag der Anmeldung: 17.01.2007
(73) Patentinhaber: DB Regio AG, 60326 Frankfurt (DE)
(72) Erfinder: Humpsch, Wolfgang, 49453 Rehden (DE)
(74) Vertreter: Zinken-Sommer, Rainer

(56) Entgegenhaltungen:
- DE-A1- 19 513 004
- DE-C1- 10 209 913

## Beschreibung

Die Erfindung betrifft eine Vorrichtung und ein Verfahren zur Steuerung einer elektropneumatischen Bremse (ep-Bremse) mit Notbremsüberbrückungseinrichtung (NBÜ). Diese Vorrichtung und dieses Verfahren wird insbesondere bei Fahrzeugen angewendet, die auf Strecken des Schienenverkehrs auf denen es Abschnitte gibt, wo Hilfeleistung im Notfall nicht im erforderlichen Umfang möglich ist, verkehren.

Es ist bekannt, dass Fahrzeuge, die auf Schnellfahrstrecken verkehren, mit einer NBÜ und mit einer ep-Bremse ausgerüstet sind. Mit diesen Einrichtungen kann der Triebfahrzeugführer die Wirkung einer eingeleiteten Notbremsung aufheben, wenn der Zug sich in einem Tunnelabschnitt befindet.

Derartige Einrichtungen und Verfahren sind im Merkblatt UIC 541-5 und in Veröffentlichungen zu den von der Deutschen Bahn AG derzeit in Fernverkehrsfahrzeugen verwendeten Systemen beschrieben.

Eine im Wagenzug betätigte Notbremse wird über ein Kabel dem Triebfahrzeugführer optisch und akustisch angezeigt. Der Triebfahrzeugführer kann insbesondere in einem Tunnelabschnitt die Notbremsung aufheben. Hierzu steuert er vom Triebfahrzeug aus über ein Kabel ein Magnetventil an, welches sich in einer Druckluftsteuerleitung vor dem betätigten pneumatischen Notbremsventil der betätigten Notbremse befindet, wodurch das Notbremsventil schließt.

Zusätzlich erkennt ein Zugbegleitpersonal an einem rot blinkenden Leuchtmelder auf einer Bedienungsschalttafel, in welchem Wagen die Notbremse betätigt wurde. Ist der Zug vom Triebfahrzeugführer außerhalb des Tunnelabschnittes zum Halten gebracht worden, hebt das Zugbegleitpersonal die Notbremsung wieder auf.

Die NBÜ nach dem Verfahren, bei dem eine Notbremsung erst nach ihrem Wirksamwerden aufgehoben werden kann, erfordert zusätzlich den Einbau der ep-Bremse, da beim bisherigen Steuersystem über die Hauptluftleitung nicht sicher verhindert werden kann, dass der Zug bei einer Notbremsung zum Halten kommt.

Bei der ep-Bremse werden parallel zur bisher üblichen Bremssteuerung über die Hauptluftleitung besondere Magnetventile an jedem Steuerventil über ein Kabel elektrisch angesteuert. Der Druck in der Hauptluftleitung wird dabei beim Bremsen gesenkt und beim Lösen der Bremsen erhöht. Dadurch sprechen alle Steuerventile gleichzeitig an, d.h. es wird ein schnelleres Anlegen und Lösen der Bremsen des hinteren Zugteils erreicht.

Eine elektrische Steuerung von Druckluftbremsen wird insbesondere angewendet, um die bei pneumatischer Steuerung zwangsläufig auftretende Durchschlagszeit der Druckwelle auszuschalten und damit eine am ganzen Zug gleichzeitig einsetzende Bremswirkung zu erzielen. Es sind 2 Systeme zu unterscheiden: Direkte und indirekte ep-Bremse. Beim direkten System werden die Bremszylinder über elektrische Brems- und Löseventile direkt be- und entlüftet. Die Druckluft wird einem Vorratsluftbehälter einer selbsttätigen Bremse oder Sonderbehältern entnommen, die Trennung von der selbsttätigen Bremse geschieht über ein Doppelrückschlagventil. Das Steuerventil der selbsttätigen Bremse bleibt in Lösestellung. Beim indirekten System wird durch Magnetventile der Druck in der Hauptluft- beziehungsweise Bremsleitung verändert, die Brems- und Lösevorgänge laufen dann über die Steuerventile ab. Um zum Lösen den Druck in der Hauptluftleitung erhöhen zu können, ist eine zweite Luftleitung (Fülleitung) erforderlich. Es können Fahrzeuge ohne elektrische Leitungen und mit nur einer Luftleitung in beschränkter Anzahl am Schluss des Zuges angehängt werden, deren Bremsen dann normal mitarbeiten. Das direkte System wird bei Triebzügen und somit Fahrzeugen, die aus einem nicht wechselnden Fahrzeugverband bestehen, angewandt. Bei Fahrzeugen, die aus einem wechselnden Fahrzeugverband bestehen, werden die Fahrzeuge mit der indirekt wirkenden ep-Bremse ausgerüstet.

Für die Übertragung der ep- und NBÜ-Signale werden z.Zt. bei Zügen, die aus einzelnen, freizügig einsetzbaren Fahrzeugen bestehen, bestimmte Adern der IS-Leitung nach UIC 558 oder eine gesonderte ep-Leitung nach UIC 541-5 verwendet.

Nachteil dieser Lösung ist insbesondere, dass insbesondere für führende Fahrzeuge spezifische, auf Fahrzeug und gewähltes Übertragungssystem zugeschnittene Lösungen mit verschiedenem Geräteaufbau und unterschiedlichen Funktionsausführungen bestehen, die nur einem relativ geringen Sicherheitsstandard genügen.

Weitere Nachteile des Standes der Technik sind:
- nach der im UIC-Merkblatt 541-5 beschriebenen Schaltung muss eine Fehlermeldung durch Betätigen eines zusätzlichen Einschalttasters quittiert werden, wobei nur während des Bremsens die Ausgabe des Brems- und Nichtausgabe eines Lösebefehles geprüft werden, wenn keine Notbremsmeldung vorliegt, werden nach dem bisher angewendeten Steuerverfahren die Löseventile der ep-Bremse, nur solange angesteuert, wie durch den Triebfahrzeugführer ein Füllstoß abgegeben wird, indem der Hebel eines des Führerbremsventils betätigt wird. Dies bedeutet insbesondere, dass so lange ein Füllstoß geben werden muss, bis die Bremsleitung wieder auf den erforderlichen Druck, insbesondere 5 bar, aufgefüllt ist.
- Für eine Bremsprobe sind grundsätzlich mindestens zwei Personen erforderlich: eine Person, der Triebfahrzeugführer, die die Funktionsfähigkeit der Bremse auf dem Triebfahrzeug überwacht sowie einer weiteren Person, die die entsprechende Bedienungen in den angehängten Fahrzeugen durchführen muss.
- Eine Notbremsung wird grundsätzlich sofort nach Betätigung durch einen Fahrgast eingeleitet, eine Überbrückung ist erst danach möglich, obwohl es unter bestimmten Betriebsverhältnissen notwendig sein kann, keine sofortige Bremsung auszulösen, um die Fahrt ohne Verzögerung fortsetzen zu können.

Das Patent DE 102 09 913 C1 beschreibt eine Einrichtung, welche bestimmte, vom Führerbremsventil vorgegebene Drücke, über pneumatisch/elektrische Wandler erfasst und proportionale elektrische Ausgangssignale bildet. Eine elektronische Auswerte- und Ausgabebaugruppe generiert daraus Anforderungssignale für die Bildung von ep-Brems- und Lösebefehlen.

Die Generierung druckproportionaler Anforderungssignale für ep- Bremsen ist bekannt.

Im Patent DE 195 13 004 A1 wird allgemein der Aufbau einer kompakten Steuereinrichtung für Bremssysteme beschrieben. Diese zeichnet sich dadurch aus, dass elektronische und pneumatische oder hydraulische Steuer- und / oder Überwachungselemente des Bremssystems in einer Einheit zusammengefasst sind.
Es werden die einzelnen Funktionen, welche integriert werden können, genannt, ohne deren Realisierung oder bestimmte Verfahren näher zu beschreiben.
Auch die Ausführung der Elemente ep- Bremse und Notbremsüberbrückung ist nicht dargelegt.

Es ist somit Aufgabe der Erfindung, eine Vorrichtung und ein Verfahren bereitzustellen, die bzw. das anpassbar an einen wechselnden Fahrzeugverband aus einem führenden Fahrzeug und wechselnden geführten Fahrzeugen sowie an bestimmte Gegebenheiten wie Passagieraufkommen, Betriebssituation oder Streckenverlauf ist sowie durch nur eine einzige Bedienperson durchzuführen ist.

Diese Aufgabe wird in Verbindung mit dem Oberbegriff des Hauptanspruches erfindungsgemäß für das Verfahren durch die in Anspruch 1 angegebenen Merkmale sowie für die Vorrichtung durch die in Anspruch 9 angegebenen Merkmale gelöst.

Ansprüche 2 bis 8 beinhalten vorteilhafte Ausführungsbeispiele der erfindungsgemäßen Lösung aus Anspruch 1. Ansprüche 10 bis 14 beinhalten vorteilhafte Ausführungsbeispiele der erfindungsgemäßen Lösung aus Anspruch 9.

Anspruch 15 enthält einen besonders vorteilhaften modularen Aufbau einer Vorrichtung aus Anspruch 9.

Nach Anspruch 1 bzw. 9 wird über einen Betriebsartenschalter entsprechend der Ausrüstung der angehängten Fahrzeuge der Betrieb eines bestimmten auf dem Fahrzeug installierten Übertragungssystems (insbesondere ep-Kabel oder IS-Leitung) oder innerhalb dessen, bestimmte Funktionen (insbesondere nur ep-Bremse, nur NBÜ, Kombination ep-Bremse und NBÜ nach verschiedenen Verfahren) ausgewählt. Die DE 102 09 913 C1 stellt den Oberbegriff beider Ansprüche dar.

Zur Ermittlung der Betriebsbereitschaft der ep-Bremse erfolgt die Aktivierung der ausgewählten Betriebsart mittels anschließend ausgelöstem Bremsbefehl. Erfolgt nach Auslösung des Bremsbefehls eine (positive) Rückmeldung, dann wird die Funktionsfähigeit der ep-Bremse angezeigt

Innerhalb des Systems werden bestimmte Funktionen der ep- Bremse überwacht und entsprechende Fehlermeldungen generiert, die eine Sammelmeldung "Störung der ep-Bremse" auslösen, welche mit einem Bremsbefehl quittiert werden muss.

Eine Aktivierung der Betriebsart und Quittierung einer Fehlermeldung erfolgt erst, wenn nach Auslösung eines Bremsbefehles dieser ordnungsgemäß auf das gewählte Übertragungssystem ausgegeben wird.

Wenn eine Fehlermeldung auftritt wird die Meldung der Funktionsfähigkeit der ep-Bremse zurückgenommen. Daraufhin muss der Triebfahrzeugführer einen Bremsbefehl mittels des Führerbremsventil abgeben. Tritt der Fehler danach nicht mehr auf (insbesondere nach einem Wackelkontakt), wird die Funktionsfähigkeit der ep-Bremse wieder angezeigt. Tritt der Fehler weiterhin auf, bleibt die Fehlermeldung bestehen.

Eine Steuerung der ep- Befehle "Bremsen" und "Lösen" erfolgt durch eine festgelegte Definition der von der Führerbremsventilanlage auszugebenden und von der Steuerung NBÜ/ep für die Bildung der entsprechenden Befehle aufzunehmenden Informationen. Insbesondere wird eine Kennlinie des Druckverlaufes an den Bremszylindern/-ventilen der angehängten Fahrzeuge an die Kennlinie des Druckverlaufes am Führerbremsventil angepasst, d.h. eine Ansteuerung der ep-Bremse verläuft parallel und zeitgleich zu einer "normalen" Bremsung.

Dies wird verknüpft mit einer Plausibilitätsprüfung durch einen Vergleich der Stellungsmeldungen des Betätigungselementes für das Führerbremsventil mit aus den nach einem bestimmten Verfahren von der Führerbremsventilanlage gebildeten Anforderungen für ep-Bremse anlegen und ep-Bremse lösen unter Berücksichtigung des tatsächlichen Druckes in der Hauptluftleitung. Somit werden die Vorgaben des Führerbremsventils als Master in Form von Soll-Druckverhältnissen mit den realen Druckverhältnissen verglichen. Die Plausibilitätskontrolle erfolgt somit zwischen den Soll-Vorgaben der eingeleiteten Bremsung und dem Ist-Zustand des örtlichen Bremsventils über Stellung des Hebels des Führerbremsventils.

Hierdurch wird sichergestellt, dass die Bildung des Befehls "ep-Bremse lösen" nicht möglich ist, wenn gleichzeitig die Bedingungen für die Bildung des Befehls "ep-Bremse anlegen" erfüllt sind.

Ein automatisches Füllen der Hauptluftleitung bis auf den vom Führerbremsventil vorgegebenen Solldruck erfolgt durch einen kurzzeitigen Füllstoßbefehl. Zusätzlich werden Ventile der Notbremse automatisch geschlossen.

Durch einen manuell oder von einem Sicherheitsssystem ausgelösten Bremsbefehl wird das Befüllen automatisch unterbrochen. Falls somit während des Befüllens eine Zwangsbremsung erfolgt, wird das Auffüllen der Hauptluftleitung automatisch unterbrochen.

Die Hauptluftleitung wird automatisch so lange aufgefüllt, bis der Solldruck erreicht ist. Der Triebfahrzeugführer muss das Führerbremsventil nur kurz antippen und hat danach Zeit für andere (sicherheitsrelevante) Handlungen.

Gemäß Anspruch 2 und 3 bzw. 10 und 11 erfolgt eine Überwachung der Befehle "ep-Bremsen und Bremse lösen" durch eine ständige Kontrolle auf Anliegen eines einem Bremsbefehl und auf Anliegen eines einem Lösebefehl entsprechenden Signals auf den dafür vorgesehenen Leitungsadern. Dies wird verknüpft mit einer Plausibilitätsprüfung durch Vergleich mit dem von der Steuerung gebildeten Status der entsprechenden Ausgabe; bei Erkennung eines nicht plausiblen Zustandes erfolgt eine Störmeldung. D.h. es wird sowohl für ep-Bremse anlegen als auch lösen überwacht, ob tatsächlich ein entsprechender Bremsbefehl anliegt oder ob es sich um eine Fremdspannung handelt.

Für die Überwachung des Zustandes der Leiterschleife für ep-Bremsen wird eine Meldung in mindestens 4 Stufen durch Erkennung von mindestens 3 festgelegten Widerstandsbereichen abgegeben. Die Stufen der Meldungen lauten hierbei insbesondere allgemeiner Fehler, Zugschluss in Ordnung, Bremsprobe Endwagen, Bremsprobe Mittelwagen. Dabei werden verschiedene, jedem Fahrzeug zugeordnete elektrische Widerstände, durch das Bedienpersonal während der Bremsprobe geschaltet. Insbesondere wird bei einem Endwagen ein Zugschluss mit Festwiderstand 1000 Ohm überbrückt. Bei einem Mittelwagen mit einem von 1000 Ohm verschiedenen Widerstand wird hingegen der Zugschluss nicht überbrückt. Somit kann festgestellt werden, in welchem Wagen die Bremsprobe durchgeführt wird.

Eine Überprüfung der Funktionsfähigkeit der ep- Bremse erfolgt zusammen mit einer Überprüfung der Funktionsfähigkeit der gesamten Bremsanlage des Fahrzeugverbandes. Durch ein Geschwindigkeitssignal und den Betriebsartschalter erfolgt ein verriegeltes Auslösen eines ep- Bremsbefehles in Abhängigkeit vom Erkennen eines bestimmten Widerstandsbereiches in der ep- Bremsschleife.

Eine Bedienperson (insbesondere der Triebfahrzeugführer) startet im führenden Fahrzeug ein halbautomatisches Bremsprobenprogramm. Daraufhin steigt die Bedienperson aus und betätigt nacheinander entsprechende Bremsproben-Taster an den angehängten Fahrzeugen. Das Bremsprobenprogramm erkennt aufgrund des entspr. elektrischen Widerstandes, ob es sich um einen Mittel- oder Endwagen handelt und löst einen Bremsbefehl aus. Die Bedienperson stellt ein ordnungsgemäßes Funktionieren der Bremse fest, indem sie das Anlegen der Bremsbeläge an Bremsscheiben bzw. Radreifen kontrolliert.

Die Vorrangschaltung der Ausgabe des ep-Bremsbefehls vor einem ep-Lösebefehl ist zusätzlich zur Logik durch Kontakte sichergestellt.

Die Leiterschleife für Notbremsmeldung und -überbrückung wird durch Erkennung bestimmter Bereiche des Schleifenwiderstandes überwacht. Dabei erfolgen bei Notbremsbetätigungen und im Fehlerfall entsprechende Meldungen.

Z.B. sinkt bei Betätigung einer Fahrgastnotbremse im Zug der Widerstand unter 240 Ohm. Mittels bestimmter Taster können diese Funktionen geprüft werden.

Die Ausgabe eines NBÜ Befehles kann ebenfalls überwacht werden.

Nach Anspruch 4 und 7 bzw. 12 und 13 erfolgt eine Überwachung des Befehls ep-Bremse anlegen und ep-Bremse lösen durch eine ständige Kontrolle eines Leitungsweges einer Steuerleitung mit mindestens 4 Adern nach dem UIC-Merkblatt 558, insbesondere deren Adern 12 und 10, auf Anliegen eines einem Bremsbefehl und eines weiteren Leitungsweges, insbesondere deren Adern 12 und 11, auf Anliegen eines einem Lösebefehl entsprechenden Signals. Dies wird verknüpft mit einer Plausibilitätsprüfung durch Vergleich mit dem von der Steuerung gebildeten Status der entsprechenden Ausgabe; bei Erkennung eines nicht plausiblen Zustandes erfolgt eine Störmeldung. Es erfolgt somit eine Plausibilitätskontrolle ob die Befehlsausgabe mit der Befehlsauslösung übereinstimmt.

Insbesondere wird erkannt, ob ein nicht abgegebener ep-Befehl anliegt, da ein ep-Befehl rückgemeldet wird obwohl kein Befehl ausgelöst wurde.

Des Weiteren sind folgende Funktionen bezüglich des gewählten Übertragungsverfahrens realisiert:
- Vorrangschaltung der ep-Befehle gegenüber den mit gegensätzlicher Polarität auf den gleichen Adern zu übertragenden Steuerbefehlen für Zuglicht und Türschließen,
- Überwachung Notbremse: Meldung Fahrgastnotbremse bei entsprechender Gebermeldung und Ausgabe einer Störmeldung bei Fehlermeldung des NBÜ-Gebers,
- Die Vorrangschaltung der Ausgabe des ep-Bremsbefehls vor einem ep-Lösebefehl ist zusätzlich zur Logik durch Kontakte sichergestellt.

Nach den Ansprüchen 5 und 6 kann ein Verfahren Notbremsüberbrückung mit erweiterter Funktion gewählt werden, nach dem die Notbremseinrichtung entsprechend der betrieblichen Erfordernisse unterschiedlich auf die Betätigung einer Fahrgastnotbremse reagiert. Danach bewirkt die Betätigung einer Fahrgastnotbremse während eines zum Ein-und Ausstieg bestimmten Zughaltes und während einer darauf folgenden Anfahrt eine sofortige, nicht überbrückbare Notbremsung. Nach der Anfahrphase ist die Notbremse bis zum nächsten zum Ein- und Ausstieg bestimmten Halt überbrückt. Die Betätigung einer Fahrgastnotbremse während dieser Phase löst eine zeitverzögerte Bremsung nur dann aus, wenn der Fahrzeugführer nach der Notbremsmeldung die Überbrückung nicht während dieser Zeit bestätigt. Nach einer Bestätigung bleiben alle Notbremsen überbrückt. Beim nächsten zum Aussteigen bestimmten Halt wird die Überbrückung wieder aufgehoben, so dass die betätigten Notbremsen bis zu ihrer manuellen Rückstellung wirken. Ein Vorteil dieses Erfindungsanspruchs besteht darin, dass die NBÜ auch ohne System der ep-Bremse ohne Einschränkungen verfügbar ist. Für diese Funktion sind getrennte Signalwege für Meldung "FGN" und Befehlsausgabe "NBÜ" erforderlich. Bei Signalübertragung nach UIC 541-5 werden dafür vorteilhaft die Adern 1 und 2 verwendet.

Die Erfindung wird nachstehend anhand von einem Ausführungsbeispiel und einer Zeichnung mit 32 Figuren näher erläutert. Die Figuren zeigen in
- **Fig. 1**: schematisch ein Beispiel eines Ablaufplanes zum Aufbau eines Steuerungssystems NBÜ/ep mit allen möglichen Übertragungssystemen,
- **Fig. 2**: schematisch eine Übersicht über die Auswahl "Betriebsart/System/Funktionen"
- **Fig. 3**: schematisch eine Übersicht über Teilprozesse "Grundfunktionen"
- **Fig. 4**: schematisch einen Teilprozess "Status Steuerung"
- **Fig. 5**: schematisch einen Teilprozess "Betriebsbereitschaft ep-Bremse"
- **Fig. 6**: schematisch einen Teilprozess "Überwachung ep-Bremse"
- **Fig. 7**: schematisch einen Teilprozess einer Steuerung von ep-Befehlen "Bremsen" und "Lösen"
- **Fig. 8**: schematisch einen Teilprozess des Befehl "Füllen"
- **Fig. 9**: schematisch einen Teilprozess "Steuerung Führerbremsventilanlage: Füllstoß"
- **Fig. 10**: schematisch einen Teilprozess "Steuerung Führerbremsventilanlage: Füllstoßsperre"
- **Fig. 11**: schematisch einen Teilprozess "Freigabe Lösen" im Verfahren Notbremsüberbrückung gemäß Merkblatt UIC 541-5 oder DB
- **Fig. 12**: schematisch einen Teilprozess "optische Meldung Notbremse"
- **Fig. 13**: schematisch einen Teilprozess "akustische Meldung Notbremse"
- **Fig. 14**: schematisch einen Teilprozess Steuerung Notbremsmeldung/überbrückung" nach Verfahren gemäß Merkblatt UIC 541-5 oder DB
- **Fig. 15**: schematisch die Phasen einer Zugfahrt
- **Fig. 16**: schematisch einen Teilprozess "Steuerung Notbremsmeldung/überbrückung" mit erweiterter Funktion
- **Fig. 17**: schematisch eine Übersicht über Teilprozesse Funktionen System DB
- **Fig. 18**: schematisch einen Teilprozess "Verriegelung einer Automation im Zug (AiZ)"
- **Fig. 19**: schematisch einen Teilprozess Überwachung ep-Brems-/Lösebefehl über eine IS- Leitung nach UIC 558 (System DB) insbesondere eine Überwachung eines ep Bremsbefehls
- **Fig. 20**: schematisch einen Teilprozess "Überwachung ep-Brems-/Lösebefehl" über eine IS- Leitung nach UIC 558 (System DB) insbesondere eine Überwachung eines ep-Lösebefehls
- **Fig. 21**: schematisch einen Teilprozess "Überwachung Fahrgastnotbremse" (FGN) DB über eine IS- Leitung nach UIC 558 (System DB)
- **Fig. 22**: schematisch eine Überwachung des Befehls "NBÜ" über eine IS-Leitung nach UIC 558 (System DB)
- **Fig. 23**: schematisch Funktionen für ein System gemäß UIC-Merkblatt UIC 541-5
- **Fig. 24**: schematisch einen Teilprozess "Überwachung ep" gemäß UIC-Merkblatt UIC 541-5 insbesondere eine Überwachung eines ep-Bremsbefehls
- **Fig. 25**: schematisch einen Teilprozess "Überwachung ep" gemäß UIC-Merkblatt UIC 541-5 insbesondere eine Überwachung eines ep-Lösebefehls
- **Fig. 26**: schematisch eine Leitungsüberwachung der ep-Bremse gemäß UIC-Merkblatt UIC 541-5, Adern 2 und 4
- **Fig. 27**: schematisch eine Anzeige zur Leitungsüberwachung der ep-Bremse gemäß UIC-Merkblatt UIC 541-5, Adern 2 und 4
- **Fig. 28**: schematisch einen Teilprozess Bremsprobe gemäß UIC-Merkblatt UIC 541-5
- **Fig. 29**: schematisch eine Leitungsüberwachung der FGN, Adern D und 4
- **Fig. 30**: schematisch eine Überwachung des Befehls "NBÜ" gemäß UIC-Merkblatt UIC 541-5.
- **Fig. 31**: schematisch eine Überwachung des Befehls "NBÜ mit erweiterter Funktion", basierend auf Übertragungsleitung nach Merkblatt UIC 541-5
- **Fig. 32**: schematisch eine Überwachung der Schleifen "FGN und "NBÜ" bei Verfahren "NBÜ mit erweiterter Funktion", basierend auf Übertragungsleitung nach Merkblatt UIC 541-5

Im Ausführungsbeispiel wird ein Steuersystem für ep-Bremse und Notbremsüberbrückung in führenden Fahrzeugen (Lok und Steuerwagen) mit über eine Logik zu realisierenden Verknüpfungen beschrieben.

Aufgrund eines modularen Aufbaus ist es an unterschiedliche Fahrzeugbauarten anpassbar und entsprechend der gewünschten Funktionen konfigurierbar. Des Weiteren werden gegenwärtig geltenden Sicherheitsanforderungen erfüllt.

### Steuerung NBÜ/ep in Fahrzeugen:

An Erzeugung, Verarbeitung und Übertragung der entsprechenden Meldungen und Befehle zur Steuerung sind im führenden Fahrzeug die folgenden Komponenten beteiligt:
- Bedien- und Anzeigeelemente im Führerraum. Hierbei sind verschiedene Betriebsarten und Funktionen des Systems NBÜ/ep einstellbar, die je nach Ausrüstung des Zuges und betrieblicher Erfordernisse vom Triebfahrzeugführer durch den Schalter für Betriebsart und bei System nach UIC 541-5 zusätzlich für Bremsprobe gewählt werden. Des Weiteren wird eine Betätigung der Fahrgastnotbremse, je nach gewähltem Übertragungssystem ggf. eines Prüftasters für Bremsprobe im Zug sowie der Zustand der Übertragungs- bzw. Meldeeinrichtung werden auf dem Führerstand optisch bzw. akustisch durch entsprechende Elemente signalisiert.
- eine Führerbremsventilanlage, die je nach Ausführung aus mechanisch bzw. pneumatisch betätigten Schaltelementen oder einer entsprechenden Steuerung besteht, die folgende binäre elektrische Signale bereitstellen:
   - Stellungen der Bedieneinheit "Fahrt", ("Betriebsbremsen") "Schnellbremsen"und "Füllstoß"
   - Anforderung "Bremsen/Lösen"
   - Differenz zwischen Soll- und Istwert des Hauptluftleitungsdruckes" richtungsbezogen
   sowie eine Einrichtung für die Unterbindung des Füllstoßes bei aktivierter ep-Bremse.
- Fahrzeugsteuerung- und Zugsicherungssysteme, die Signale über Fahrtrichtung, Bewegungszustand des Fahrzeuges, Freigabe der Einstiegtüren im Zug und automatisch gesteuerte Bremsanforderungen liefern
- eine Steuerungsbaugruppe: Die Steuerbefehle und Signale werden abhängig von bestimmten Bedienhandlungen auf dem Führerstand und bestimmten Parametern des Bremssystems gebildet. Über Koppelelemente wird eine Verbindung zu Übertragungssystemen hergestellt.

Je nach Einsatz und Verwendungszweck enthalten alle Fahrzeuge des Fahrzeugverbandes folgende Einrichtungen vollständig oder teilweise.
- einen Schaltkontakt, welcher bei Betätigung einer FGN schließt
- einen Leuchtmelder für die Signalisierung einer betätigten Fahrgastnotbremse
- einen Leuchtmelder welcher die Funktion der Notbremsüberbrückung anzeigt
- eine elektropneumatische Steuereinheit für elektrisch gesteuertes Bremsen durch Entlüften der Hauptluftleitung bzw. Lösen durch Auffüllen der Hauptluftleitung aus der Behälterleitung,
- ein Magnetventil mit Bypass für die Unterbrechung der durch Betätigung der Fahrgastnotbremse ausgelösten Entlüftung der Hauptluftleitung,
- eine Steuerungsbaugruppe für das jeweilige Übertragungssystem. Sie enthält alle für die Leitungsüberwachung erforderlichen Elemente und realisiert die Verknüpfung der Befehle und die Ansteuerung der Anzeige- und Funktionselemente der Notbremsüberbrückung und Meldung.
- bei Ausrüstung mit System nach UIC 541-5, Taster und Leuchtmelder für Auslösen und Signalisierung der ep-Bremsprobe an jeder Längsseite

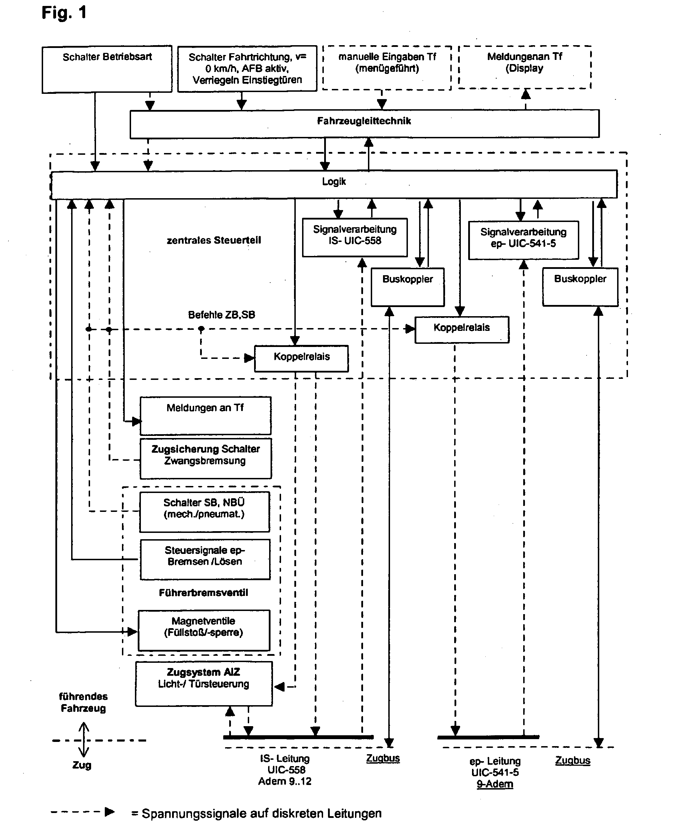

**Fig. 1** zeigt ein Beispiel zum Aufbau des Steuerungssystems NBÜ/ep mit allen möglichen Übertragungssystemen. Hierbei
- besteht ein Steuerungssystem aus zentralem Steuerteil und peripheren Baugruppen für Bedienung, Anzeige und aktiven Elementen wie Schaltgeräte und Magnetventile,
- erfolgen Verbindungen des zentralen Steuerteils mit peripheren Baugruppen und Fahrzeugsteuersystemen innerhalb des Fahrzeuges sowohl mittels Spannungssignalen über diskrete Leitungen als auch in bestimmten Fällen mittels digitaler Telegramme über elektronische Bussysteme,
- erfolgt parallel zur Logik eine direkte Ansteuerung der Ausgabe ep- Bremsen durch Schaltkontakte bei Anforderung Schnell- oder Zwangsbremsen,
- ist das zentrale Steuerteil NBÜ/ep einheitlich aus Modulen aufgebaut und damit entsprechend der Anforderungen konfigurierbar, womit eine Anpassung an alle Fahrzeugbauarten und funktionale Anforderungen gewährleistet ist.

### Übertragungssystem für Informationen und Steuerbefehle:

Für eine Übertragung der Informationen und Steuerbefehle können verschiedene Systeme eingesetzt werden:
- DB mit Befehls- und Signalübertragung über die IS- Leitung mit 13- bzw. 18 Adern entsprechend UIC 558
- über die Bremssteuerleitung mit 9 Adern nach dem UIC-Merkblatt 541-5
- fahrzeugspezifisch festgelegte Signalleitungen
- digitale Telegramme in einem elektronischen Bussystem auf einer speziellen Leitung

Im Falle einer IS- Leitung mit 13- bzw. 18 Adern entsprechend UIC 558 (System DB) werden Steuerbefehle mittels Gleichspannung 24 V wie folgt übertragen:
- "ep- Bremsen": Adern 10-12, gegensätzlich polarisiert zu "Beleuchtung Ein"
- "ep-Lösen": Adern 11-12, gegensätzlich polarisiert zu "Beleuchtung Aus"
- "NBÜ": Adern 09-12, gegensätzlich polarisiert zu "Türen Schließen"

Da die Ader 12 als gemeinsamer Rückleiter durch die NBÜ/ep- Bremssteuerbefehle mit unterschiedlicher Polarität gegenüber den Befehlen zum zentralen Türschließen und zur Beleuchtungssteuerung beaufschlagt wird, müssen die Befehlsgruppen im führenden Fahrzeug wie folgt gegeneinander verriegelt werden:

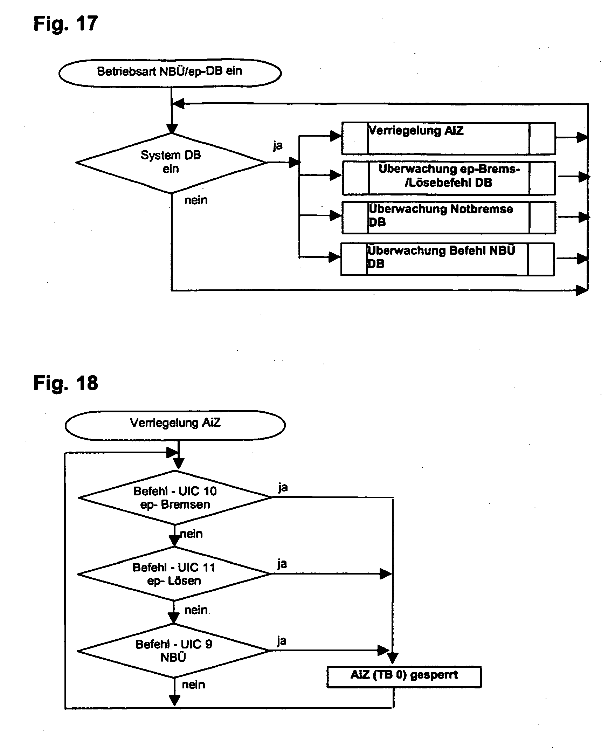

Bei ep/NBÜ- Befehlen werden die Türblockierung und die zentrale Beleuchtungssteuerung (AiZ) abgeschaltet, um einen direkten Kurzschluss der beide Gruppen versorgenden Spannungsquelle zu verhindern. (siehe **Fig. 18**)

Damit haben die Befehle des Bremssystems immer Vorrang vor denen der Zugbeleuchtung und der Einstiegtüren.

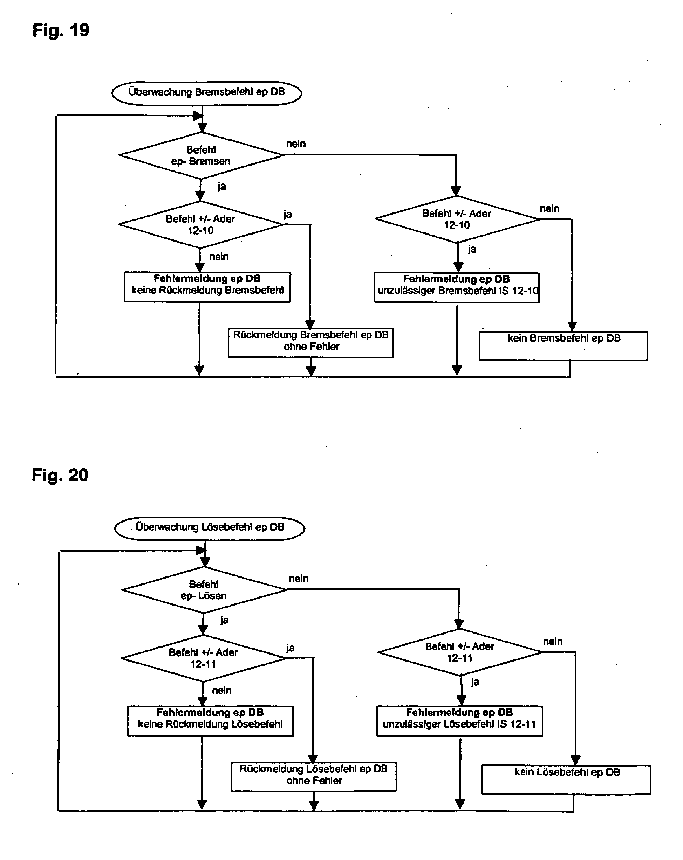

Zusätzlich zu den bisher bekannten Ausführungen wird dabei die Belegung der Ader 10 mit Bremsbefehl, der Ader 11 mit Lösebefehl und der Ader 9 mit NBÜ-Befehl überwacht und auf Plausibilität geprüft. (siehe **Fig. 19, 20** und **21**)

Die Überwachung der Notbremseinrichtungen im Zug erfolgt über die Adern 9 und 10 mittels einer Wechselspannung von U_{eff} = 1V bei einer Frequenz von 1kHz. Diese wird von einem auf dem Führungsfahrzeug installierten Geber erzeugt.

Bei Betätigen einer Fahrgastnotbremse in einem Wagen verbindet im Notbremszugkasten ein Schalter diese Spannungsquelle mit einer Reihenschaltung L-C auf der sogenannten NBÜ-Wagenkarte. Der resultierende Stromfluss in dem so entstandenen Saugkreis löst im führenden Fahrzeug die Meldung aus.

Eine Bremssteuerleitung mit 9 Adern ist im Merkblatt der UIC 541-5 als System zur Steuerung ep-Bremse und Überwachung der Steuerleitungen beschrieben.

Für die hier beschriebenen Funktionen werden die Adern 1,2,3,4 und D der Steuerleitung nach UIC 541-5 benötigt.

Die Leitungswege 2-4 und D-4 sind jeweils am Zugende durch Widerstände verbunden. Diese Stromkreise werden überwacht, indem in jede Schleife ein konstanter Strom von 20 mA eingespeist und der dem jeweiligen Widerstand entsprechende Spannungsabfall registriert wird.

Die Komponenten für die Überwachung dieser Schleife sind in Merkblatt UIC 541-5 Punkt 5.4.3 beschrieben.

Die Adern 2 und 4 sind am Zugende durch einen Zugschlusswiderstand R₁=1000 Ω verbunden.

Bremsproben werden durch Betätigung des Tasters P, welcher einen Widerstand R₃=1600 Ω zwischen die Adern schaltet, ausgelöst. Dabei wird unterschieden zwischen Betätigung am Endwagen oder an einem Zwischenwagen. Damit kann der Schleifenwiderstand R_{S} drei verschiedene Werte annehmen:

| | |
|---|---|
| R_{S} = R₃= 1600 Ω | Bremsprobe am Endwagen |
| R_{S} = R₁= 1000 Ω | ein Zugschluss |
| R_{S} = 1/(1/R₁ + 1/R₃) = 615 Ω | Bremsprobe an Mittelwagen |

Er wird durch die Überwachungseinrichtung SEP überwacht, welche jeden dieser 3 Werte erkennt und die entsprechenden Meldungen
SEP2: "Bremsprobe Endwagen"
SEP1: "Zugschluss ep"
SEP3: "Bremsprobe Mittelwagen"
an die nachgeschaltete Logik weitergibt.

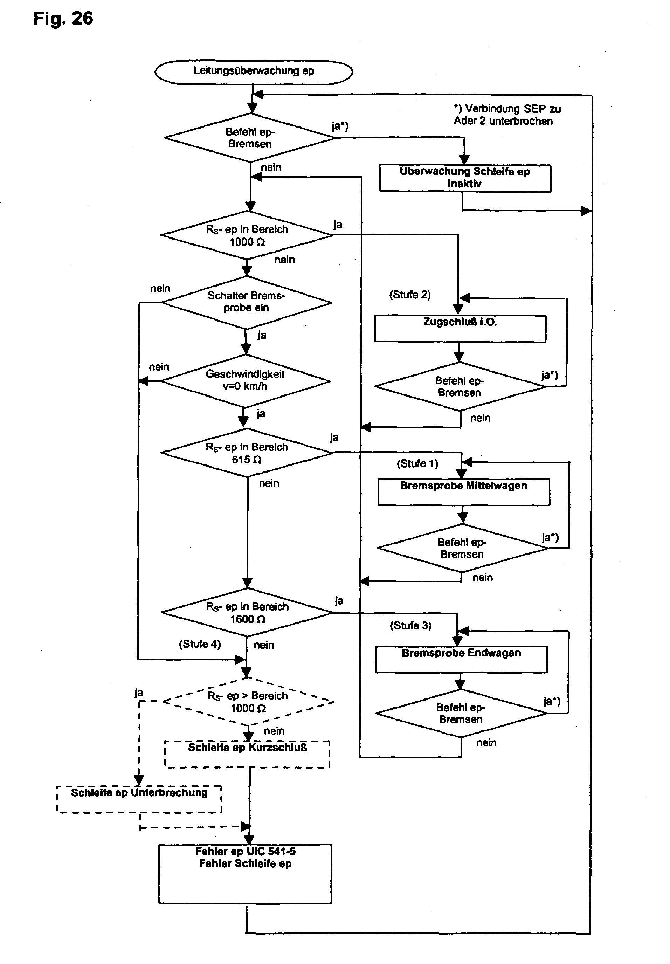

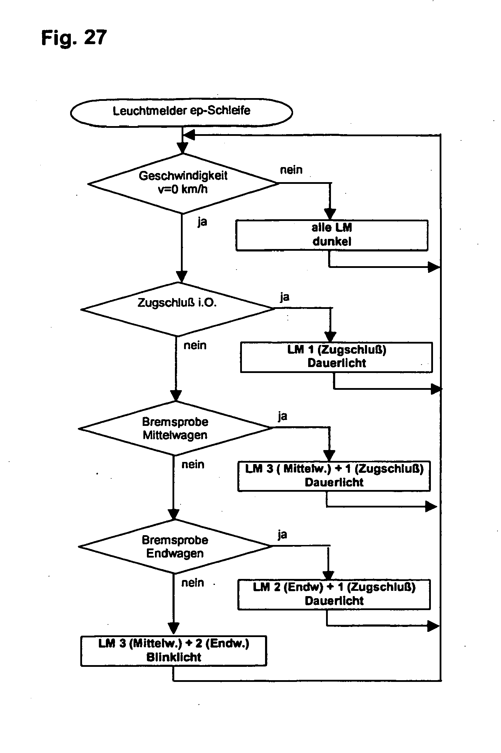

Erfindungsgemäß erfolgt die Signalisierung der durch die Überwachungseinrichtung gewonnenen Messergebnisse in 4 Stufen mittels dreier Leuchtmelder oder auf einem Display. Eine Darstellung dieser Verknüpfung als Ablaufplan zeigt **Fig. 26** und **27**.

Die Meldung einer betätigten Fahrgastnotbremse aus einem Wagen erfolgt nach dem gleichen Prinzip.

Die Adern D und 4 sind am Endwagen über einen Widerstand R₂= 1300 Ω verbunden.

Bei Anwendung der NBÜ mit erweitertem Funktionsumfang schaltet ein über die Befehlsleitung NBÜ gesteuertes Relais bei Ausgabe des Befehls NBÜ über die Adern 1-2 am Endwagen anstelle des Widerstandes R₂ einen von diesem um 300 Ω verringerten Zugschlusswiderstand zwischen die Adern D und 4. Die Steuerung im führenden Fahrzeug wertet diese Änderung des Schleifenwiderstandes abhängig von der Befehlsausgabe aus und ermöglicht damit die Überwachung des Befehls NBÜ bis zum Zugschluss.

Ein Kontakt der Fahrgastnotbremse schaltet zum Zugschlusswiderstand einen Widerstand von 240 Ω parallel. Erfindungsgemäß erfolgt die Erkennung und Meldung durch die Überwachung SSA auf dem Führungsfahrzeug, welche die Meldungen SSA1 für "Schleife NBÜ i.O.", SSA2 für "FGN" und SSA3 für Rückmeldung Befehl NBÜ vom Zugschluss bei dem Verfahren "NBÜ mit erweiterter Funktion"steuert:
- SSA1 (Meldung Schleife NBÜ i.O.) ist "ein", wenn ein Widerstand von 1300 Ω (Zugschluss) registriert wird, ohne dass auf den Adern 1-2 ein Befehl "NBÜ" ausgegeben wird. Zustand "aus" zeigt Unterbrechung oder mehrere Zugschlüsse im Leitungsweg, d.h. "Fehler" an.
- SSA2 (Meldung FGN) ist "ein", wenn ein Widerstand von weniger als 240 Ω und mehr als 16 Ω gemessen wird. Kann ein Zug aus maximal 15 frei kuppelbaren Einheiten bestehen, zeigt ein Wert von weniger als 16 Ω Kurzschluss.
- SSA3 (Rückmeldung Befehl NBÜ) ist "ein", wenn während der Ausgabe des Befehls "NBÜ" auf den Adern 1-2 zwischen den Adern D und 4 ein Widerstand von 1000 Ω registriert wird

Die Auswertung der durch die Meldekontakte übermittelten Informationen und die Steuerung des Leuchtmelders "FGN" erfolgt in der nachgeschalteten Logik.

Die Magnetventile der Bremse in den Wagen werden durch eine Nennspannung von 110 V Gleichspannung über die Adern 3 und 4 mit gemeinsamem Rückleiter (0) auf Ader 2 angesteuert.

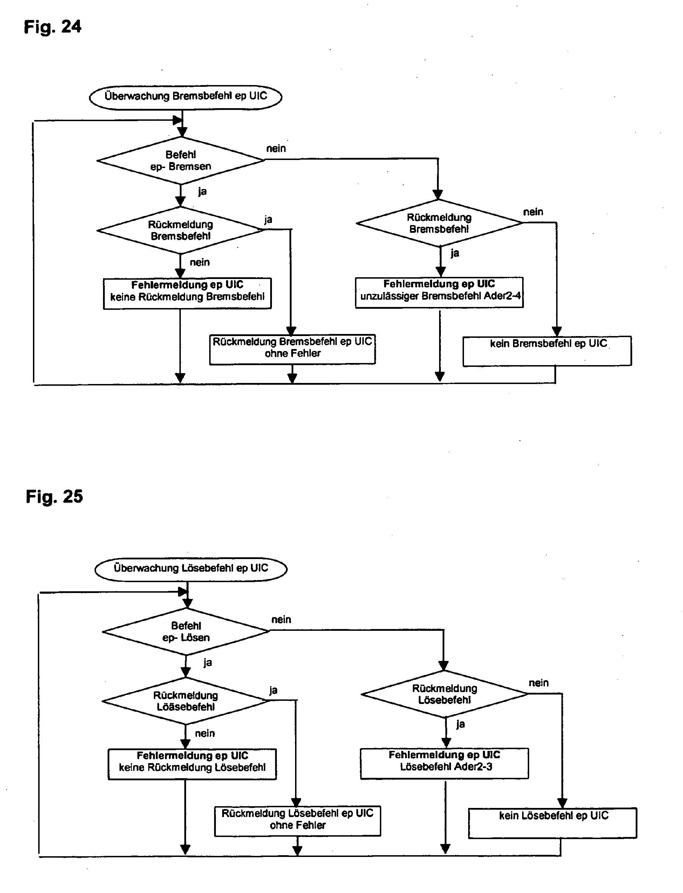

Erfindungsgemäß wird die Ader 4 ständig auf Belegung mit einem Bremsbefehl überwacht und die Plausibilität geprüft, siehe **Fig. 24**.

Nach Merkblatt UIC 541-5 kann auch eine vereinfachte Variante ohne die oben beschriebene Schleifenüberwachung angewendet werden. Danach wird bei Ausgabe eines Bremsbefehls auf Ader 4 seine Rückführung auf Ader 1 überprüft. Bleibt diese aus, wird eine Fehlermeldung ausgegeben.

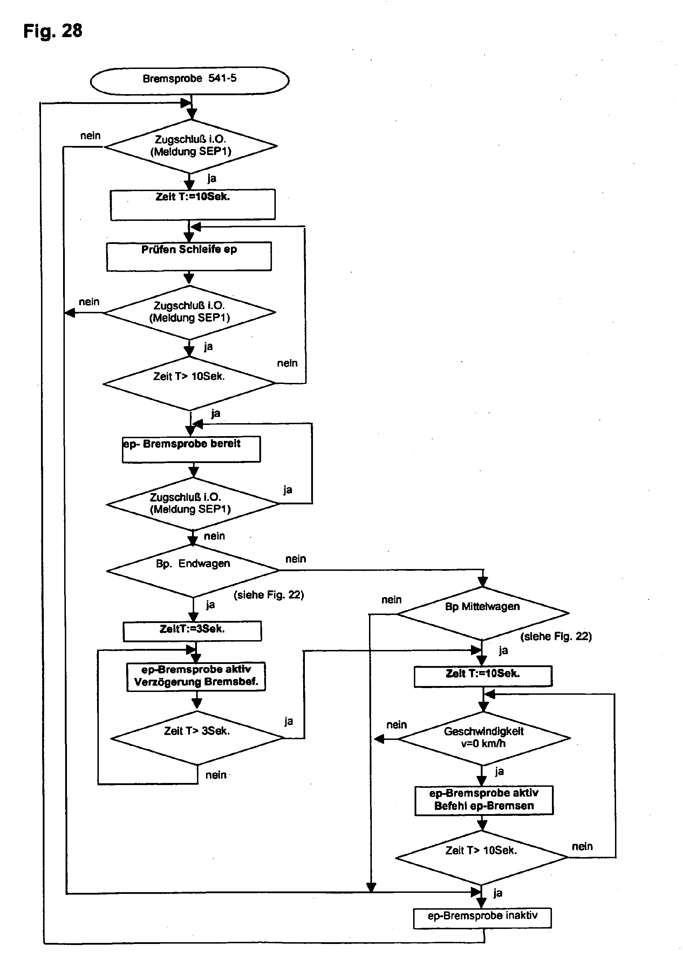

Die Prüfung des Systems wird in **Fig. 28** dargestellt.

Erfindungsgemäß wird die Ader 3 ständig auf Belegung mit einem Lösebefehl überwacht und die Plausibilität geprüft, siehe **Fig. 25**.

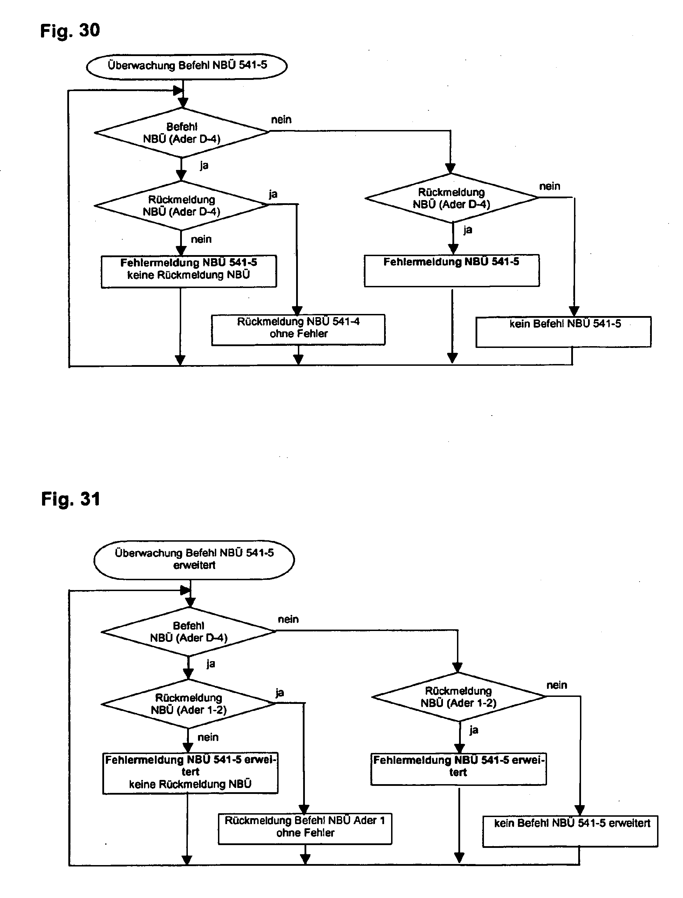

Bei NBÜ nach dem in UIC 541-5 beschriebenen Verfahren erfolgt die Ansteuerung der Relais "NBÜ" in den Wagen mit 48V Gleichspannung über die Adern 4 (0) und D (+).Erfindungsgemäß erfolgt zusätzlich eine Prüfung der Rückmeldung bei Ausgabe des Befehles, siehe **Fig. 30**.

Bei NBÜ mit erweitertem Funktionsumfang wird die Überbrückung in den Wagen durch ein 110V Gleichspannungssignal auf den Adern 1 (+) und 2 (0) gesteuert. Das Magnetventil NBÜ kann direkt oder über ein zwischengeschaltetes Relais geschaltet werden.Im Falle der Verwendung eines elektronischen Busssystems realisiert eine spezielle Buskopplerbaugruppe folgende Funktionen:
- Umsetzung der von der Logik des zentralen Steuerteiles ausgegebenen Befehle in Bustelegramme
- Senden der Telegramme mit ep- und NBÜ-Befehlen an Fahrzeuge des Zuges, dabei haben die Telegramme für "ep-Bremsen" Vorrang vor "ep-Lösen"
- Überwachung der Signalübertragung
- Überwachung Zugschluss
- Überwachung Fahrgastnotbremse
- Umsetzung der empfangenen Telegramme in Eingangssignale für die Logik des zentralen Steuerteiles

Die Spezifikation erfolgt entsprechend dem Standard des gewählten Bussystems.

### Funktionsbeschreibung eines Steuerungsablaufes in einem führenden Fahrzeug:

Erfindungsgemäß ist ein Funktionsablauf im führenden Fahrzeug strukturiert aus Blöcken aufgebaut, mit der Möglichkeit, an bestimmte, unabhängig vom gewählten Übertragungssystem stets vorhandene Grundfunktionen, je nach Aufgabenstellung entsprechende Funktionsblöcke anzufügen. Als Grundfunktionen werden die Funktionen bezeichnet, die unabhängig von der Wahl des Informations- und Befehls- Übertragungssystems vorhanden sein müssen.

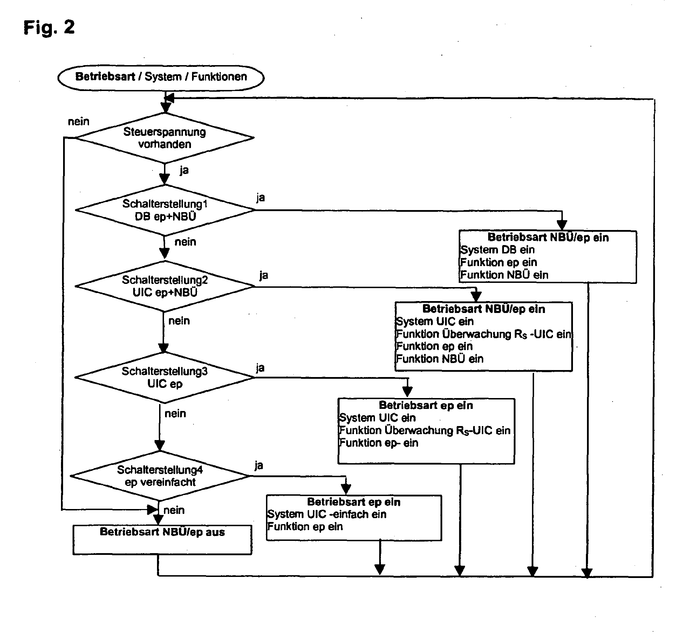

Auf jedem Führerstand ist ein Wahlschalter vorhanden. Er verfügt gemäß **Fig. 2** über folgende Stellungen:
- 0: Aus
- 1: ep- Bremse DB und NBÜ DB (IS-Leitung UIC 558)
- 2: ep- Bremse UIC 541-5 mit Überwachung und NBÜ (Verfahren UIC oder erweiterte Funktion)
- 3 ep- Bremse UIC 541-5 mit Überwachung ohne NBÜ
- 4: ep- Bremse UIC ohne Überwachung (vereinfachtes System UIC 541-5)

Die Steuerung ist hierbei so ausgelegt, dass sie alle möglichen Konfigurationen berücksichtigt.

Innerhalb des Systems UIC 541-5 sind die Betriebsarten ep-Bremse mit NBÜ, ep-Bremse ohne NBÜ oder ep-Bremse vereinfacht (ohne NBÜ) möglich. Danach laufen die einzelnen Teilprozesse entsprechend ab.

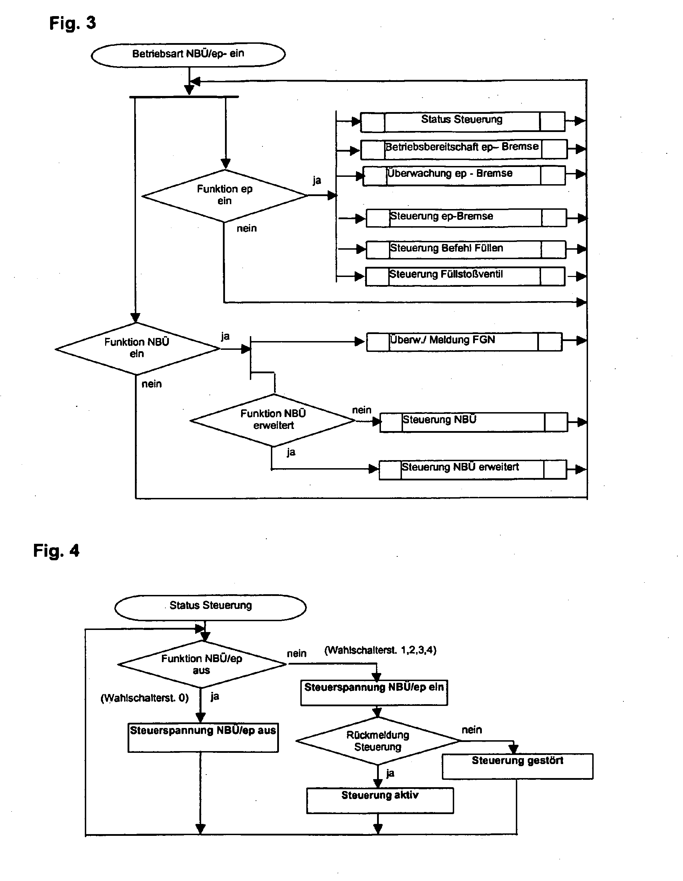

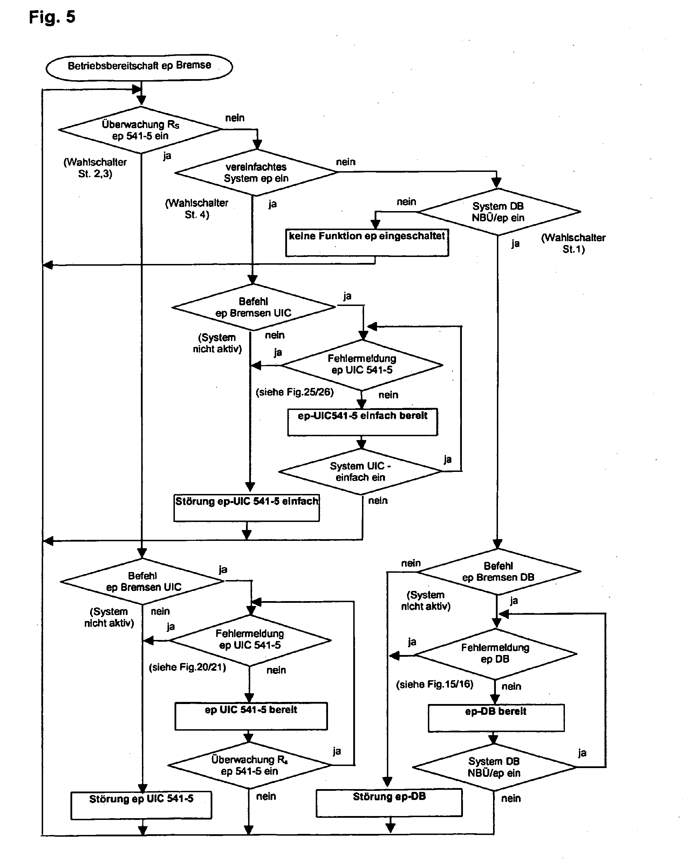

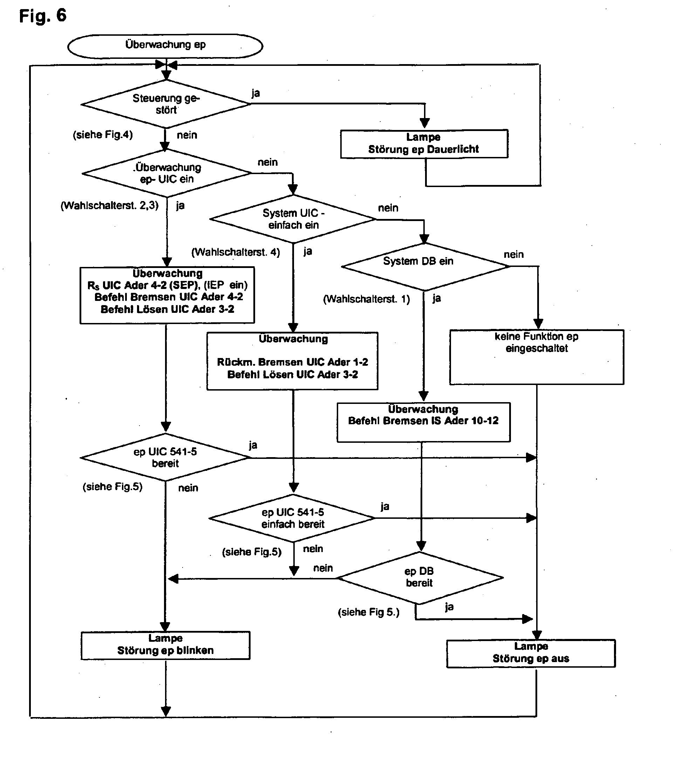

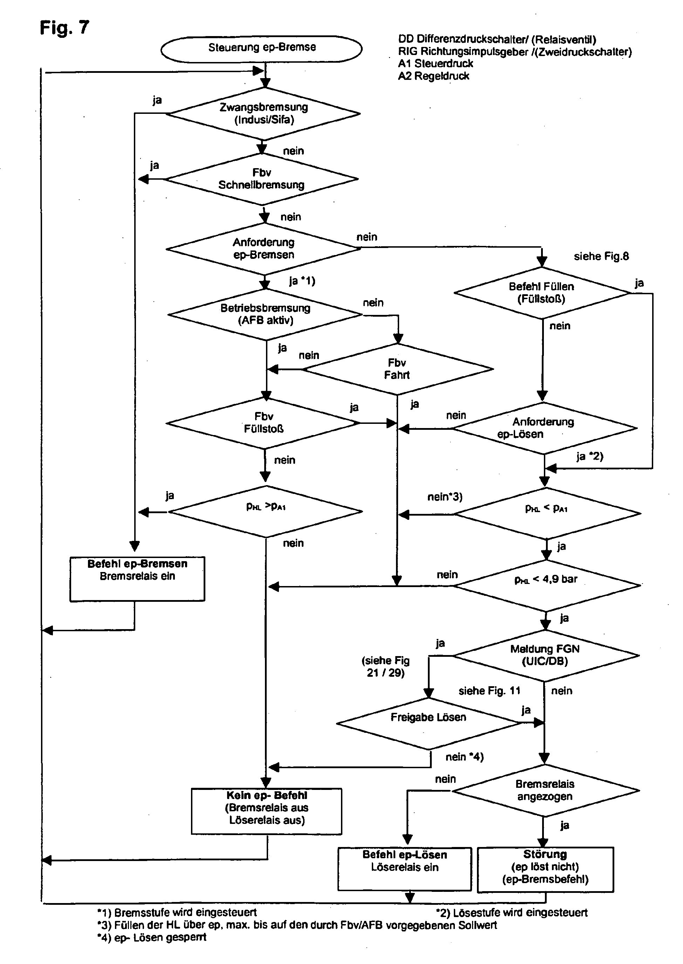

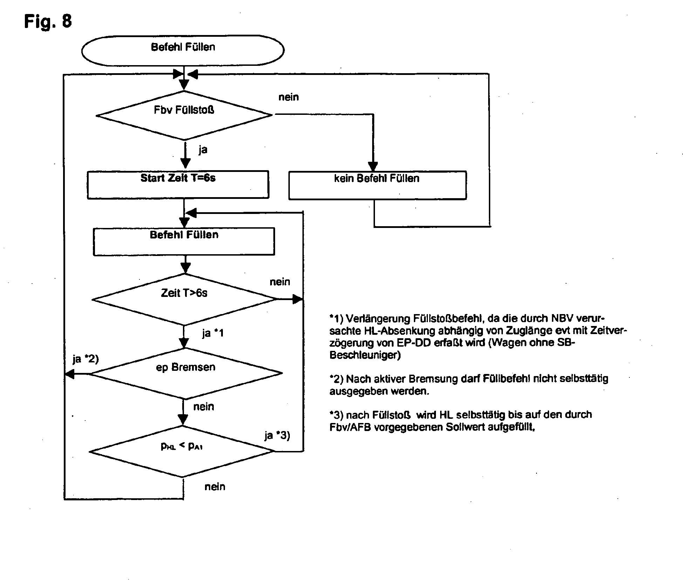

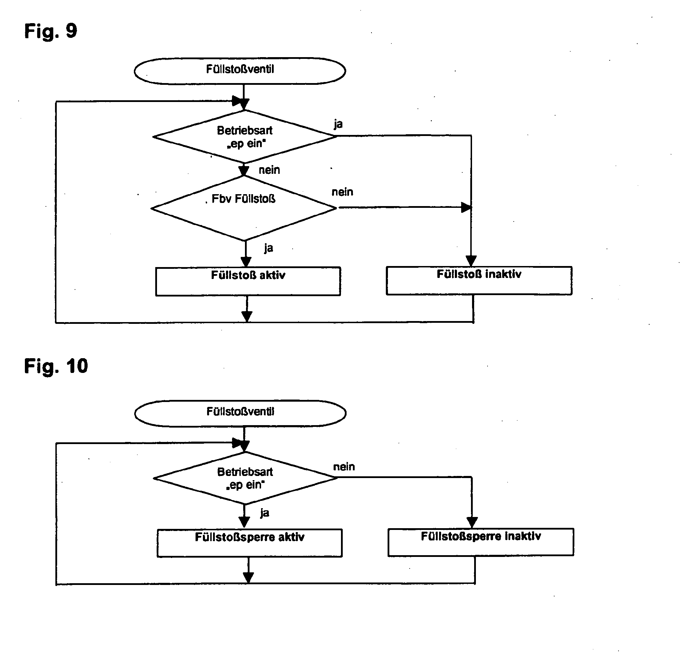

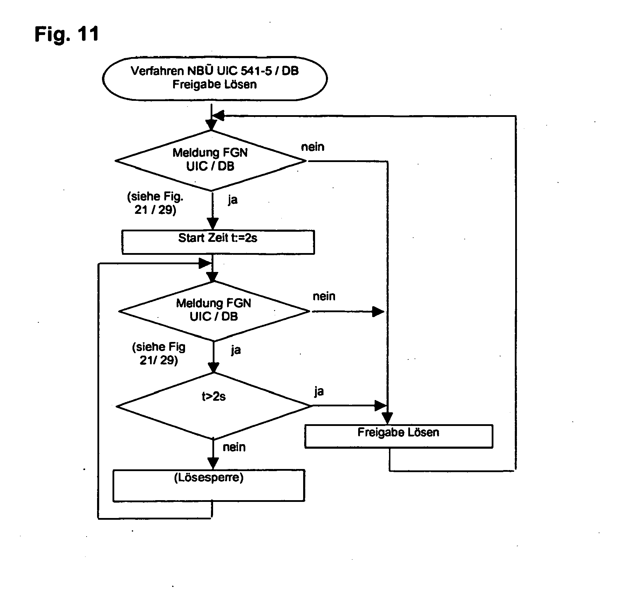

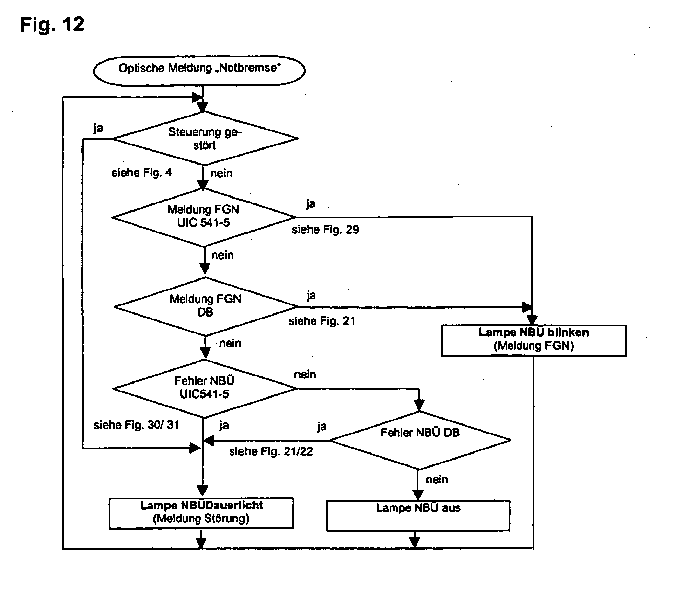

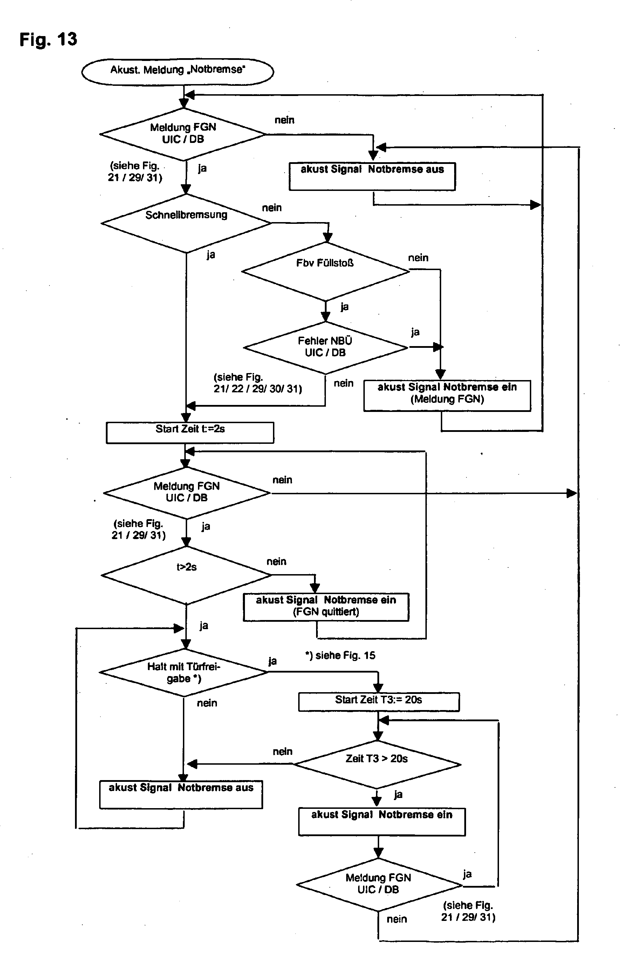

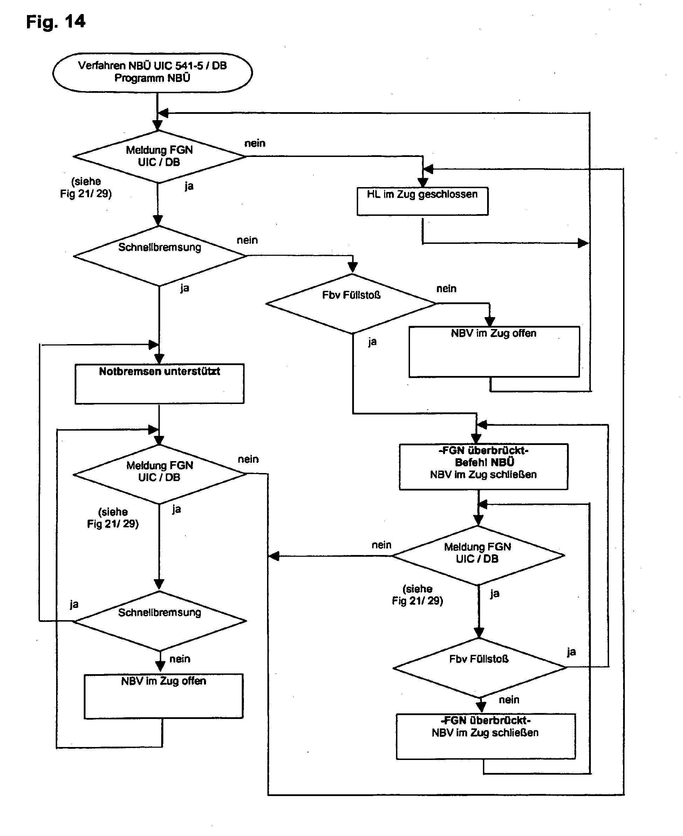

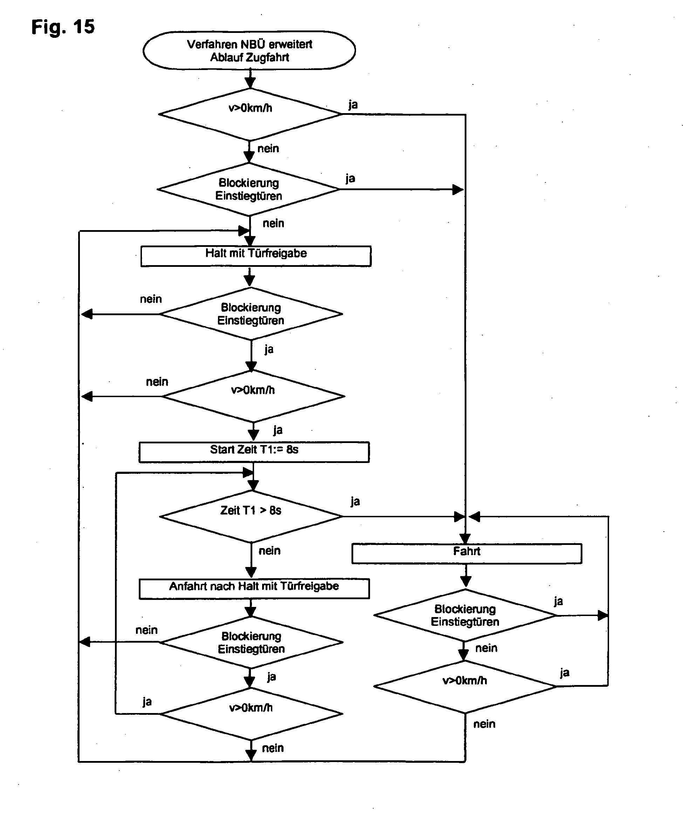

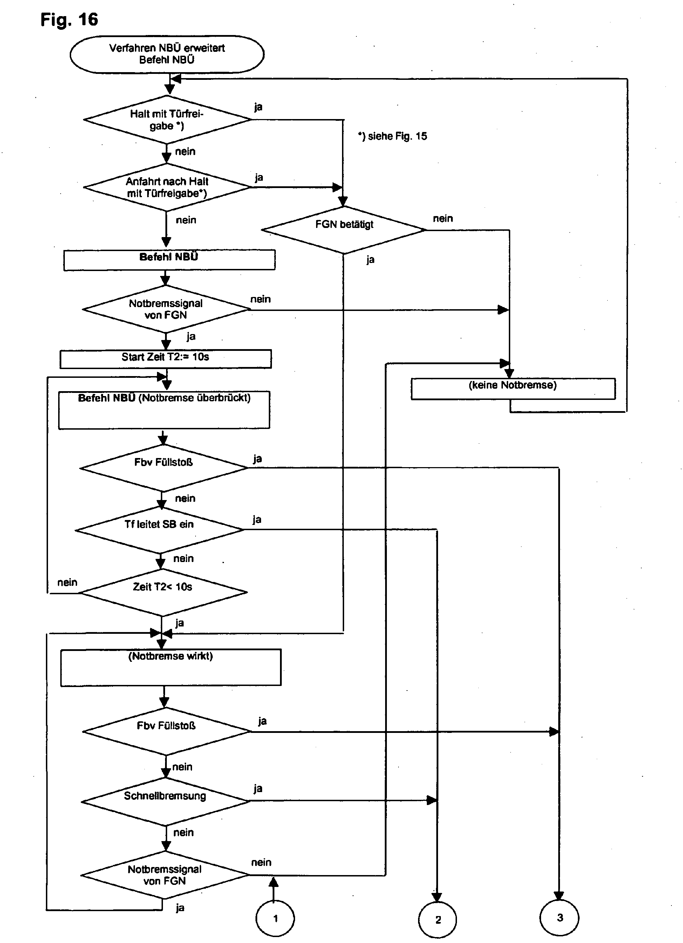

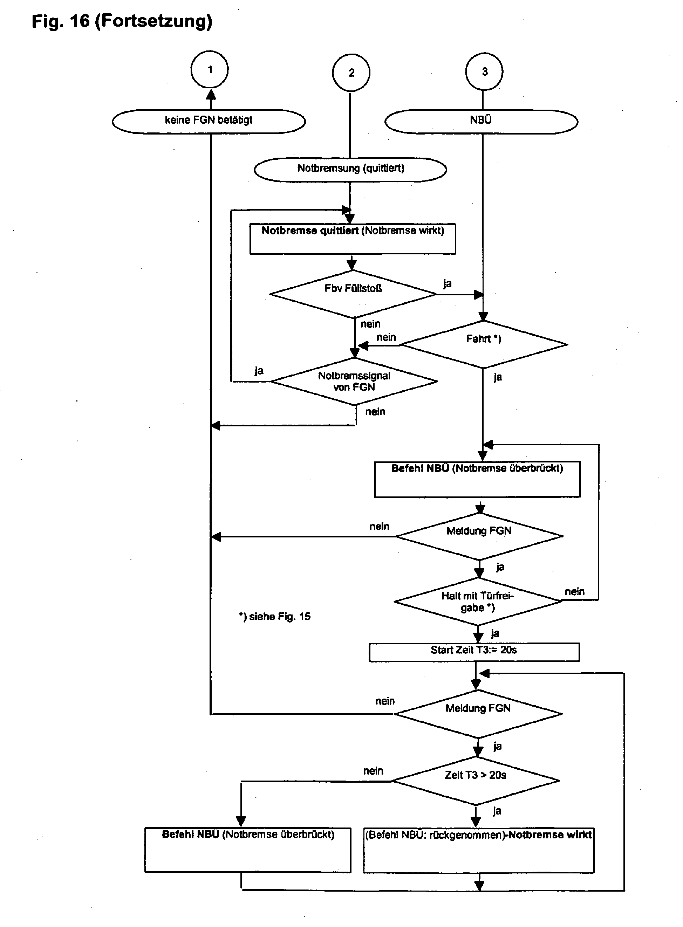

In der Betriebsart "NBÜ/ep ein" können gemäß **Fig. 3** einzelne Teilprozesse als Grundfunktionen betrachtet werden:
- Status Steuerung, siehe **Fig. 4**
- Betriebsbereitschaft ep - Bremse, siehe **Fig. 5**
- Überwachung ep - Bremse, siehe **Fig. 6**
- Steuerung ep- Bremse mit EP2 Einheit, siehe **Fig. 7**
- Steuerung Befehl Füllen, siehe **Fig. 8**
- Steuerung Füllstoßventil Führerbremsventilanlage D2/D5, siehe **Fig. 9**
- Steuerung Füllstoßventil Führerbremsventilanlage GD/HD, siehe **Fig. 10**
- Freigabe ep- Lösebefehl bei Verfahren gemäß Merkblatt UIC 541-5 und DB siehe **Fig. 11**
- Optische Meldung "Notbremse", siehe **Fig. 12**
- akustische Meldung "Notbremse", siehe **Fig. 13**
- Steuerung Notbremsmeldung/-überbrückung gemäß Merkblatt UIC 541-5 und DB , siehe **Fig. 14**
- Ablauf einer Zugfahrt siehe **Fig. 15**
- Steuerung Notbremsmeldung/-überbrückung mit erweiterter Funktion, siehe **Fig. 16**

Erfindungsgemäß erfolgt nach **Fig. 5** die Aktivierung der ausgewählten Betriebsart mittels anschließend ausgelöstem Bremsbefehl. Die ep-Bremse befindet sich im Zustand "Störung", wenn das gewählte System
- nach Betätigen des Wahlschalters nicht aktiviert ist, oder
- eine Fehlermeldung ausgibt.

Eine "Störung" im System ep -Steuerung wird gemäß **Fig. 6** signalisiert durch die entsprechende Meldelampe wie folgt:
- bei Steuerungsfehler durch Dauerlicht
- bei System nach UIC 541-5 mit ständig aktiver Überwachung durch Blinken
- bei System UIC 541-5 vereinfacht durch Blinken
- bei System DB durch Blinken

Gemäß **Fig. 7** können im Teilprozess Steuerung ep- Befehle "Bremsen" und "Lösen" über die Bedienung des Führerbremsventils folgende Funktion vorgegeben werden: "Füllstoß"(Fü), "Fahrt" (F), "Betriebsbremsen" (BB), oder "Schnellbremsen" (SB). Die entsprechend zugeordneten Schaltkontakte melden diese an die Steuerung.

Die Anforderungen ep-Bremsen und ep-Lösen werden in der Führerbremsventilanlage gebildet und sind nicht Gegenstand dieses Schutzrechtsanspruches.

Erfindungsgemäß
- erfolgt eine Plausibilitätsprüfung durch Verknüpfung der Stellungsmeldungen des Betätigungselementes für das Führerbremsventil mit aus den nach einem bestimmten Verfahren von der Führerbremsventilanlage gebildeten Anforderungen für ep-Bremsen und -Lösen, unter Berücksichtigung des tatsächlichen Druckes in der Hauptluftleitung. Dabei ist ein Signal "Betriebsbremsen" (BB) nur bei automatisch gesteuertem Fahr- und Bremsbetrieb (AFB) zwingend erforderlich.
- wird durch die Logik sichergestellt, dass die Bildung des Befehls "ep- Lösen" nicht möglich ist, wenn gleichzeitig die Bedingungen für die Bildung des Befehls "ep-Bremsen erfüllt sind.
- wird bei Schnellbremsstellung des Führerbremsventils ep- Bremsen direkt angesteuert.

Nach **Fig. 8** erfolgt erfindungsgemäß eine Funktion zum automatischen Füllen der Hauptluftleitung bis auf den vom Führerbremsventil vorgegebenen Solldruck durch kurzzeitigen Füllstoßbefehl mit Interruptmöglichkeit durch einen manuell oder von einem Sicherheitsssystem ausgelösten Bremsbefehl.

Nach **Fig. 9** und **10** (Steuerung Führerbremsventilanlage Füllstoßfunktion) bewirkt bei einer rein pneumatisch gesteuerter Bremse die Füllstoßfunktion erhöhte Nachspeiseleistung, um ein schnelles Lösen der Bremsen im Zug zu erzielen. Mit der Zusatzfunktion ep ist dies nicht erforderlich.

Bei längerer Betätigung oder Bedienung bei gelösten Bremsen ist eine Überhöhung des Hauptluftleitungsdruckes möglich, was zum Überladen der A-Kammer im Steuerventil von Bremsen im Zug führt. Zur Notbremsüberbrückung wird das Bedienteil des Führerbremsventils in Füllstoßstellung gelegt. Um dabei das beschriebene Überladen zu verhindern, muss die pneumatische Füllstoßfunktion unterbunden werden.

Je nach Ausführung kann die Führerbremsventilanlage mit aktiver Ansteuerung oder Sperre der Funktion Füllstoß ausgeführt sein.

Nach **Fig. 11** bleibt bei dem Verfahren gemäß Merkblatt UIC 541-5 und DB nach Meldung einer Fahrgastnotbremse die Ausgabe eines ep- Lösebefehls zunächst für 2 Sekunden gesperrt, um eine sicheres Öffnen und Schließen der pneumatischen Notbremsventile auch bei unmittelbar folgender Betätigung der Notbremsüberbrückung zu gewährleisten.

Nach **Fig. 12** (Teilprozess optische Meldung "Notbremse") zeigt eine Meldelampe "Notbremse" mit Blinken die Betätigung einer Fahrgastnotbremse und mit Dauerlicht einen Fehler in der Überwachung an.

Nach **Fig. 13** wird die Betätigung einer Fahrgastnotbremse durch ein akustisches Signal im Führerraum signalisiert. Bei Quittierung der Meldung verstummt dieses Signal bis zum nächsten Zughalt mit Türfreigabe (siehe auch **Fig. 15**).

Nach **Fig 15** wird eine Zugfahrt in einzelne Phasen unterteilt.

Nach **Fig. 16** (NBÜ 541-5 mit erweiterter Funktion) erfolgt eine Steuerung des NBÜ- Befehls entsprechend der einzelnen Phasen einer Zugfahrt.

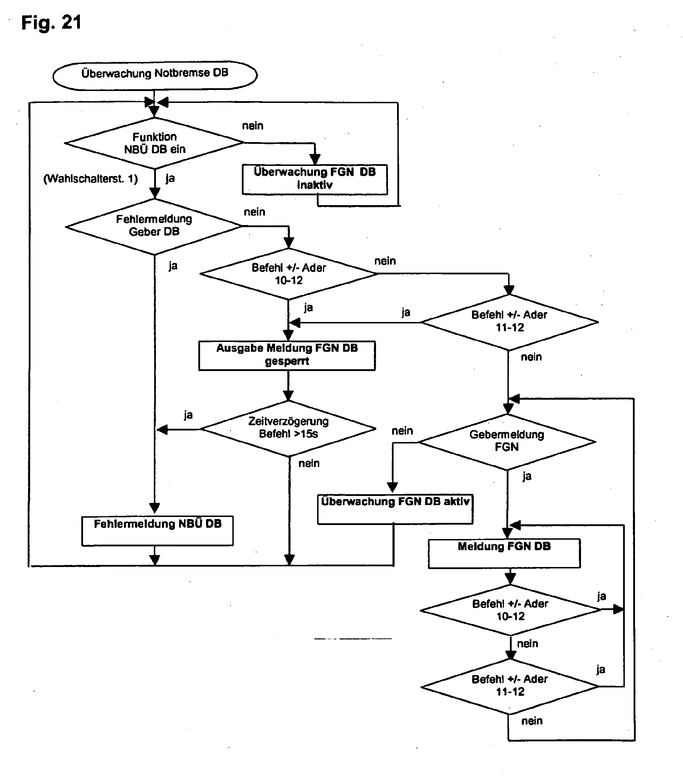

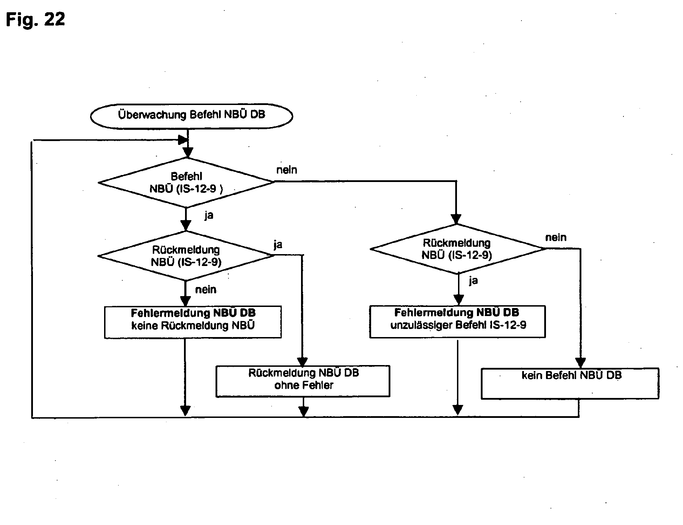

Für das System DB sind zusätzlich zu den Grundfunktionen nach **Fig. 17** folgende Funktionen erforderlich:
- Teilprozess Verriegelung AiZ (TBO.TAV, Zuglicht), siehe **Fig. 18**
- Teilprozess Überwachung ep- Brems-/ Lösebefehl DB, siehe **Fig. 19** und **20**
- Teilprozess Überwachung Notbremse DB, siehe **Fig. 21**
- Teilprozess Überwachung Befehl NBÜ DB, siehe **Fig. 22**

Um einen Kurzschluss über die Ader 12 zu vermeiden, muss die gleichzeitige Ausgabe von Befehlen für die Türsteuerung und für die ep- Bremse /NBÜ (AiZ) im Führungsfahrzeug verhindert werden.

Gemäß **Fig. 19** und **20** (Teilprozess Überwachung ep- Brems-/Lösebefehl DB) erfolgt eine ständige Kontrolle der Adern IS 12-10 auf Anliegen eines einem Bremsbefehl und der Adern IS 12-11 auf Anliegen eines einem Lösebefehl entsprechenden Signals und Plausibilitätsprüfung durch Vergleich mit dem von der Steuerung gebildeten Status der entsprechenden Ausgabe; bei Erkennung eines nicht plausiblen Zustandes erfolgt eine Störmeldung.

Gleichzeitige Befehle "Türen schließen" auf Ader 9 und "Zuglicht ein/aus" oder "ep-Bremsen/Lösen" auf Ader 10/11 der IS-Leitung interpretiert der Geber systembedingt, fälschlicherweise als "Notbremsmeldung". In diesen Fällen wird gemäß **Fig. 21** (Teilprozess Überwachung FGN DB) deshalb die Generierung einer Meldung unterdrückt. Eine bereits vorher ausgegebne Meldung FGN bleibt erhalten.

Nach **Fig. 22** (Überwachung Befehl NBÜ DB) erfolgt eine Prüfung der Rückmeldung bei Ausgabe des Befehles NBÜ DB.

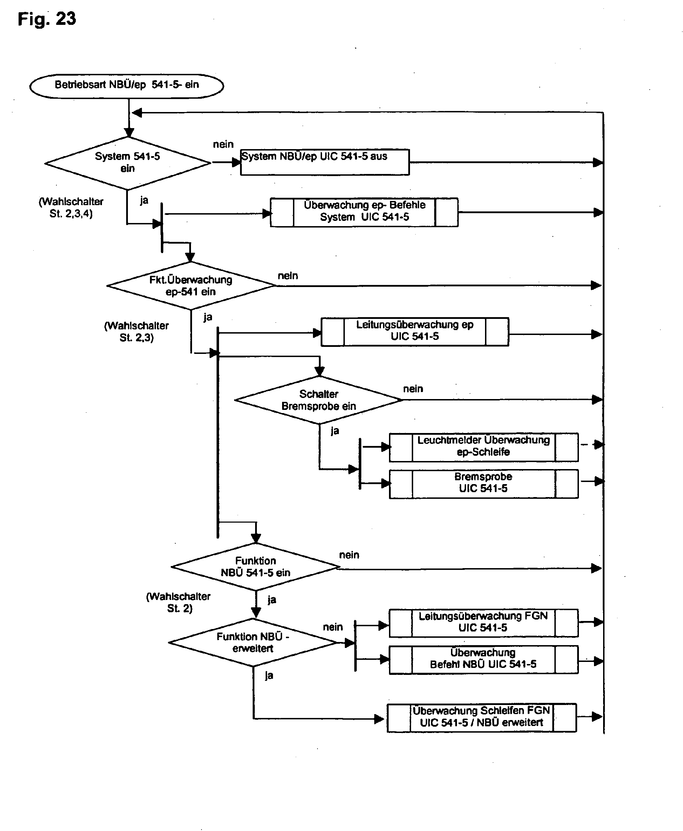

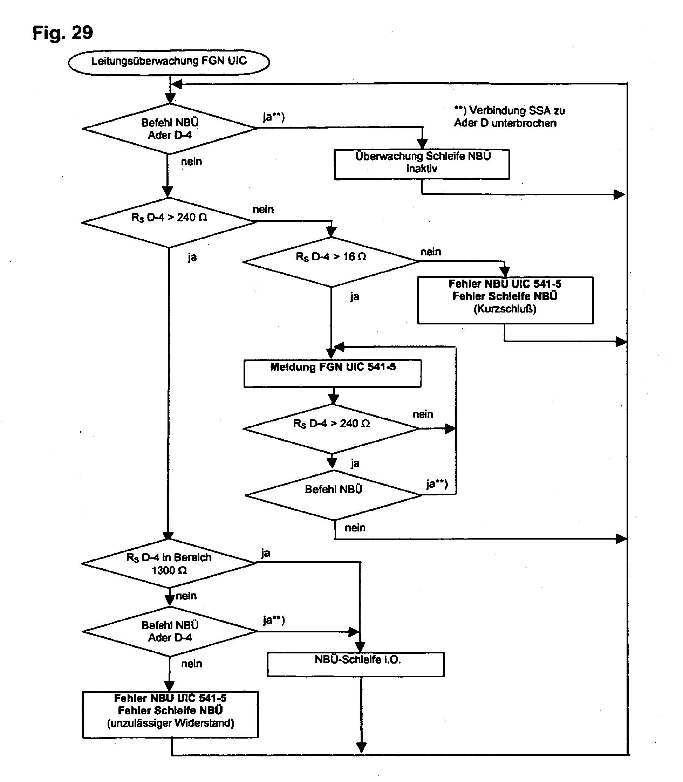

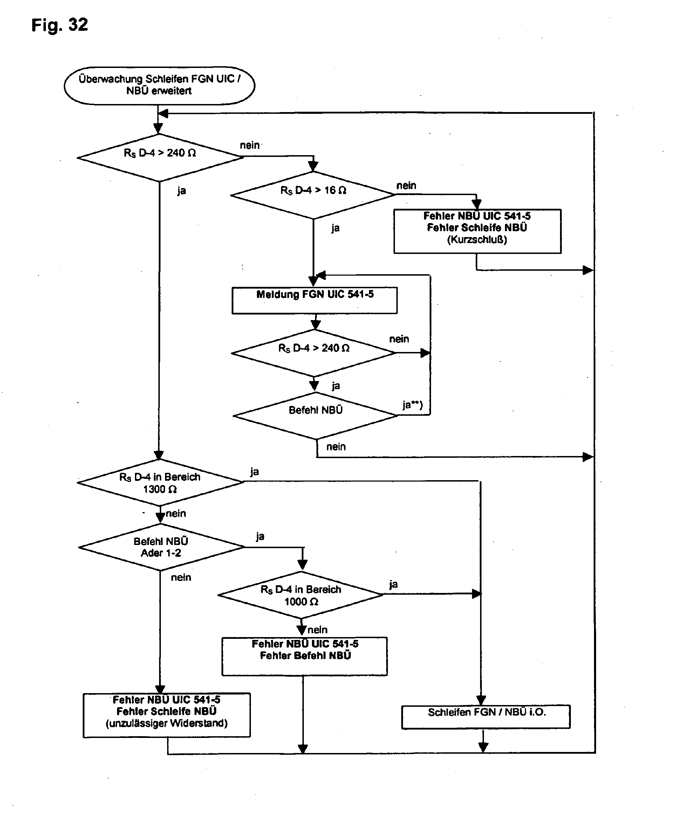

Für das System UIC 541-5 sind nach **Fig. 23** folgende Funktionen zusätzlich zu den Grundfunktionen erforderlich:
- Teilprozess Überwachung Befehle ep UIC 541-5, siehe **Fig. 24** und **25**
- Teilprozess Leitungsüberwachung UIC 541-5 Adern 2-4 (ep) , siehe **Fig. 26**
- Teilprozess Leuchtmelder Überwachung ep-Schleife, siehe **Fig. 27**
- Teilprozess Bremsprobe UIC 541-5, siehe **Fig. 28**
- Teilprozess Leitungsüberwachung UIC 541-5 Adern D-4 (FGN), bei Verfahren gemäß Merkblatt UIC 541-5 siehe **Fig. 29**
- Teilprozess Überwachung Befehl NBÜ bei Verfahren gemäß Merkblatt UIC 541-5, siehe **Fig. 30****.**
- Teilprozess Überwachung Befehl "NBÜ mit erweiterter Funktion", basierend auf der Übertragungsleitung gemäß Merkblatt UIC 541-5, siehe **Fig. 31**.
- Teilprozess Überwachung der Leiterschleifen "FGN" (D-4) und "NBÜ" (1-2) bei Verfahren "NBÜ mit erweiterter Funktion", basierend auf der Übertragungsleitung gemäß Merkblatt UIC 541-5 siehe **Fig. 32**

Nach **Fig. 24** und **25** (Teilprozess Überwachung ep UIC 541-5) erfolgt eine ständige Kontrolle der Ader 4 auf Anliegen eines einem Bremsbefehl und der Ader 3 auf Anliegen eines einem Lösebefehl entsprechenden Signals und Plausibilitätsprüfung durch Vergleich mit dem von der Steuerung gebildeten Status der entsprechenden Ausgabe. Bei Erkennung eines nicht plausiblen Zustandes erfolgt eine Störmeldung.

Nach **Fig. 26** (Leitungsüberwachung ep, Adern 2-4) erfolgt eine Bildung der Meldung über den Zustand der Leiterschleife für ep- Bremsen in 4- Stufen durch Erkennung von 3 festgelegten Widerstandsbereichen sowie eine Anzeige der 4-stufigen Überwachung mittels Leuchtmelder nach **Fig. 27**.

Nach **Fig. 28** (Teilprozess Bremsprobe 541-5) erfolgt durch ein Geschwindigkeitssignal und ein Betriebsartschalter ein verriegeltes Auslösen eines ep-Bremsbefehles zum Zwecke der Bremsprobe in Abhängigkeit vom Erkennen eines bestimmten Widerstandsbereiches in der ep- Bremsschleife.

Nach **Fig. 29** (Leitungsüberwachung FGN UIC, Adern D-4) erfolgt eine Bildung der Meldung über den Zustand der Leiterschleife für NBÜ in 3- Stufen durch Erkennung von 2 festgelegten Widerstandsbereichen

Nach **Fig. 30** und **31** (Überwachung Befehl NBÜ 541-5) erfolgt eine Prüfung der Rückmeldung bei Ausgabe des Befehles NBÜ 541-5.

Nach **Fig. 32** (Überwachung Schleifen FGN UIC / NBÜ) erfolgt bei Verfahren NBÜ mit erweiterter Funktion neben der Überwachung der Leiterschleife D-4 bezüglich Zugschluss und Betätigung einer Fahrgastnotbremse mittels zweier Widerstandbereiche bei Ausgabe des Befehles NBÜ durch Erkennen eines dritten Widerstandsbereichs über die Schleife D-4.eine Prüfung der Rückmeldung vom Zugschluss.

## Patentansprüche

1. Verfahren zur Steuerung einer elektropneumatischen (ep-) Bremse mit Notbremsüberbrückungseinrichtung (NBÜ) und einer Überwachung der Übertragungssysteme von schienengebundenen Fahrzeugen, die aus einem Fahrzeugverband aus einem führenden Fahrzeug und mindestens einem geführten Fahrzeug bestehen, wobei die Anzahl der geführten Fahrzeuge sowie eine Zusammensetzung des Fahrzeugverbandes anpassbar an bestimmte Gegebenheiten wie Passagieraufkommen oder Streckenverlauf ist,
**dadurch gekennzeichnet, dass**
- eine ausgewählte Betriebsart mittels ausgelöstem Bremsbefehl aktiviert wird,
- innerhalb des Systems Funktionen überwacht und im Falle eines Fehlers entsprechende Fehlermeldungen generiert werden, die eine Sammelmeldung "ep-Störung" auslösen und von einen Triebfahrzeugführer mit einem Bremsbefehl quittiert werden müssen,
- Aktivierung der Betriebsart und Rücksetzen der Sammelmeldung "ep-Störung" erst erfolgen, wenn bei Ausgabe der ep-Signale kein Fehler erkannt wird,
- eine Plausibilitätsprüfung durch Verknüpfung einer Stellungsmeldung des Betätigungselementes für ein Führerbremsventil mit den entsprechenden Anforderungen für "ep-Bremse anlegen" bzw. "ep-Bremse lösen" und einem tatsächlichen Luftdruck in der Bremsluftleitung durchgeführt wird,
- die Bremsluftleitung bis auf den vom Führerbremsventil vorgegebenen Solldruck durch einen kurzzeitigen Füllstoßbefehl mit einer Unterbrechungsmöglichkeit durch einen manuell oder von einem Sicherheitsssystem ausgelösten Bremsbefehl automatisch aufgefüllt wird.

2. Verfahren zur Steuerung einer elektropneumatischen (ep-) Bremse mit Notbremsüberbrückungseinrichtung (NBÜ) nach Anspruch 1, **dadurch gekennzeichnet dass** für einen Funktionsblock eines Übertragungssystems über eine Bremssteuerleitung mit mindestens 3 Adern für Steuerung ep-Bremse und einer zusätzlichen Ader für die Funktion NBÜ
- eine ständige Kontrolle eines Leitungsweges auf Anliegen eines einem Befehl "ep-Bremse anlegen" und eines weiteren Leitungsweges auf Anliegen eines einem Befehl "ep-Bremse lösen" entsprechenden Signals und Plausibilitätsprüfung durch Vergleich mit einem von der Steuerung gebildeten Status der entsprechenden Ausgabe durchgeführt wird und bei Erkennung eines nicht plausiblen Zustandes eine Störmeldung abgegeben wird,
- eine Meldung über einen Zustand einer Leiterschleife für ep-Bremsen in mindestens 4 Stufen durch Erkennung von mindestens 3 festgelegten Widerstandsbereichen abgegeben wird,
- ein verriegeltes Auslösen eines Befehls "ep-Bremse anlegen" durch ein Geschwindigkeitssignal und Betriebsartschalter in Abhängigkeit vom Erkennen eines bestimmten Widerstandsbereiches in einer ep- Bremsschleife erfolgt,
- eine Vorrangschaltung einer Ausgabe eines Befehl "ep-Bremse anlegen" vor einem Befehl "ep-Bremse lösen" zweifach durch das Verfahren und Kontakte der Ausgabeschaltgeräte sichergestellt wird,
- eine Meldung über den Zustand einer Leiterschleife für Meldung Fahrgastnotbremse und Notbremsüberbrückung in mindestens 3 Stufen durch Erkennung von mindestens 2 festgelegten Widerstandsbereichen abgegeben wird.

3. Verfahren zur Steuerung einer elektropneumatischen (ep-) Bremse mit Notbremsüberbrückungseinrichtung (NBÜ) nach Anspruch 2, **dadurch gekennzeichnet dass** für einen Funktionsblock eines Übertragungssystems eine Bremssteuerleitung mit mindestens 4 Adern nach dem UIC-Merkblatt 541-5 verwendet wird.

4. Verfahren zur Steuerung einer elektropneumatischen (ep-) Bremse mit Notbremsüberbrückungseinrichtung (NBÜ) nach Anspruch 1, **dadurch gekennzeichnet dass** für einen Funktionsblock eines Übertragungssystems mit Befehls- und Signalübertragung über die Steuerleitung mit mindestens 3 Adern für Steuerung ep-Bremse und einer zusätzlichen Ader für die Funktion NBÜ:
- eine ständige Kontrolle eines Leitungsweges auf Anliegen eines einem Befehl "ep-Bremse anlegen" und eines weiteren Leitungsweges auf Anliegen eines einem Befehl "ep-Bremse lösen" entsprechenden Signals und eine Plausibilitätsprüfung durch einen Vergleich mit einem von einer Steuerung gebildeten Status einer entsprechenden Ausgabe durchgeführt wird und bei Erkennung eines nicht plausiblen Zustandes eine Störmeldung ausgegeben wird,
- eine Störungsmeldung bei Fehler im Übertragungssystem ausgegeben wird,
- eine Vorrangschaltung einer Ausgabe eines Befehls "ep-Bremse anlegen" vor einem Befehl "ep-Bremse lösen" zweifach durch das Verfahren und Kontakte der Ausgabeschaltgeräte sichergestellt wird,

5. Verfahren zur Steuerung einer elektropneumatischen Bremse mit Notbremsüberbrückungseinrichtung (NBÜ) nach einem oder mehreren der Ansprüche 1 bis 4, **dadurch gekennzeichnet, dass** für einen Funktionsblock eines Übertragungssystems über eine Steuerleitung mit mindestens 3 Adern für die Funktion NBÜ:
- ein Verfahren Notbremsüberbrückung gewählt wird, nach dem die Notbremseinrichtung entsprechend der betrieblichen Erfordernisse während der einzelnen Phasen einer Zugfahrt unterschiedlich auf die Betätigung einer Fahrgastnotbremse reagiert,
- während der Phasen "Zughalt für Ein- und Ausstieg" und "Anfahrt nach Zughalt für Ein- und Ausstieg" kein Überbrückungsbefehl ausgegeben werden kann,
- die Phase "Zughalt für Ein- und Ausstieg" bestimmt wird durch die Erfassung der Signale "Freigabe der Einstiegtüren im Zug" und "Geschwindigkeit gleich Null" im führenden Fahrzeug,
- die Phase "Anfahrt nach Zughalt für Ein- und Ausstieg" bestimmt wird durch Ablauf einer entsprechend des Beschleunigungsvermögens des Zuges festgelegter Zeit nach Verriegeln der Einstiegtüren und Geschwindigkeit größer Null,
- die Phase Zugfahrt nach Ablauf der Anfahrzeit beginnt,
- während der Phase "Zugfahrt" ein Dauersignal "NBÜ" ausgegeben wird,
- falls während der Zugfahrt keine Notbremse betätigt wurde, das Dauersignal "NBÜ" bei Geschwindigkeit unter einem bestimmten Wert und Freigabe der Einstiegtüren sofort rückgenommen wird,
- während einer Phase "Zugfahrt" betätigte, und durch Bedienung des Fahrzeugführers dauerhaft überbrückte Notbremsen im Zug bei Geschwindigkeit unter einem bestimmten Wert und Freigabe der Einstiegtüren zeitverzögert wirksam werden,
- getrennte Signalwege für Meldung "FGN" und Befehlsausgabe "NBÜ" verwendet werden.

6. Verfahren zur Steuerung einer elektropneumatischen Bremse mit Notbremsüberbrückungseinrichtung (NBÜ) nach Anspruch 3, **dadurch gekennzeichnet, dass** für einen Funktionsblock eines Übertragungssystems über eine Steuerleitung mit mindestens 3 Adern für die Funktion NBÜ:
- bei Verwendung der NBÜ mit erweitertem Funktionsumfang für die Übertragung des Überbrückungsbefehls die positive Ader 1 und die Ader 2 der Masse mit 110 V Gleichspannung beaufschlagt werden,
- bei Ausgabe des NBÜ-Befehls am letzten Wagen anstelle des im Merkblatt UIC 541-5 genannten Widerstandes ein von diesem um einen festgelegten Betrag abweichender Zugschlusswiderstand zwischen die Adern D und 4 geschaltet wird,
- durch Erkennung eines dritten Widerstandsbereiches bei Ausgabe eines NBÜ- Befehls, seine Wirkung bis zum Zugschluß geprüft wird.

7. Verfahren zur Steuerung einer elektropneumatischen (ep-) Bremse mit Notbremsüberbrückungseinrichtung (NBÜ) nach Anspruch1, **dadurch gekennzeichnet, dass** für einen Funktionsblock eines Übertragungssystems mit Befehls- und Signalübertragung 4 Adern einer IS- Leitung entsprechend UIC 558 verwendet wird.

8. Verfahren zur Steuerung einer elektropneumatischen (ep-) Bremse mit Notbremsüberbrückungseinrichtung (NBÜ) nach Anspruch 1, **dadurch gekennzeichnet, dass** für einen Funktionsblock eines Übertragungssystems mittels eines elektronischen Bussystems mindestens folgende Funktionen realisiert werden
- Senden von Telegrammen mit ep- und NBÜ-Befehlen an Fahrzeuge des Fahrzeugverbandes, wobei Telegramme für "ep-Bremse anlegen" Vorrang vor Telegrammen für "ep-Bremse lösen" haben,
- Überwachung einer Signalübertragung,
- Überwachung eines Zugschlusses,
- Überwachung von Fahrgastnotbremsen.

9. Vorrichtung zur Steuerung einer elektropneumatischen (ep-) Bremse mit Notbremsüberbrückungseinrichtung (NBÜ) und einer Überwachung der Übertragungssysteme von schienengebundenen Fahrzeugen, die aus einem Fahrzeugverband aus einem führenden Fahrzeug und mindestens einem geführten Fahrzeug bestehen, wobei die Anzahl der geführten Fahrzeuge sowie eine Zusammensetzung des Fahrzeugverbandes anpassbar an bestimmte Gegebenheiten wie Passagieraufkommen oder Streckenverlauf ist,
**dadurch gekennzeichnet, dass**
- ein ausgelöster Bremsbefehl eine ausgewählte Betriebsart aktiviert,
- die Vorrichtung Funktionen überwacht und im Falle eines Fehlers entsprechende Fehlermeldungen generiert, die eine Sammelmeldung "ep-Störung" auslösen und von einen Triebfahrzeugführer mit einem Bremsbefehl quittiert werden müssen,
- Aktivierung der Betriebsart und Rücksetzen der Sammelmeldung "ep-Störung" erst erfolgen, wenn die Vorrichtung bei Ausgabe der ep-Signale kein Fehler erkennt,
- die Vorrichtung eine Plausibilitätsprüfung durch Verknüpfung einer Stellungsmeldung des Betätigungselementes für ein Führerbremsventil mit den entsprechenden Anforderungen für "ep-Bremse anlegen" bzw. "ep-Bremse lösen" und einem tatsächlichen Luftdruck in der Bremsluftleitung durchführt,
- ein kurzzeitiger Füllstoßbefehl mit einer Unterbrechungsmöglichkeit durch einen manuell oder von einem Sicherheitsssystem ausgelösten Bremsbefehl die Bremsluftleitung bis auf den vom Führerbremsventil vorgegebenen Solldruck automatisch aufgefüllt.

10. Vorrichtung zur Steuerung einer elektropneumatischen (ep-) Bremse mit Notbremsüberbrückungseinrichtung (NBÜ) nach Anspruch 9, **dadurch gekennzeichnet, dass** die Vorrichtung für einen Funktionsblock eines Übertragungssystems über eine Bremssteuerleitung mit mindestens 3 Adern für Steuerung ep-Bremse und mindestens einer zusätzlichen Ader für die Funktion NBÜ
- eine ständige Kontrolle eines Leitungsweges auf Anliegen eines einem Befehl "ep-Bremse anlegen" und eines weiteren Leitungsweges auf Anliegen eines einem Befehl "ep-Bremse lösen" entsprechenden Signals und eine Plausibilitätsprüfung durch Vergleich mit einem von der Steuerung gebildeten Status der entsprechenden Ausgabe durchführt und bei Erkennung eines nicht plausiblen Zustandes eine Störmeldung abgibt,
- eine Meldung über einen Zustand einer Leiterschleife für ep-Bremsen in mindestens 4 Stufen durch Erkennung von mindestens 3 festgelegten Widerstandsbereichen abgibt,
- ein verriegeltes Auslösen eines Befehls "ep-Bremse anlegen" durch ein Geschwindigkeitssignal und Betriebsartschalter in Abhängigkeit vom Erkennen eines bestimmten Widerstandsbereiches in einer ep- Bremsschleife durchführt,
- eine Vorrangschaltung einer Ausgabe eines Befehl "ep-Bremse anlegen" vor einem Befehl "ep-Bremse lösen" zweifach durch das Verfahren und Kontakte der Ausgabeschaltgeräte sicherstellt,
- eine Meldung über den Zustand einer Leiterschleife für Meldung Fahrgastnotbremse und Notbremsüberbrückung in mindestens 3 Stufen durch Erkennung von mindestens 2 festgelegten Widerstandsbereichen abgibt.
- eine Meldung über den Zustand einer Leiterschleife für Meldung Fahrgastnotbremse und Notbremsüberbrückung, die Wirkung eines NBÜ-Befehls bis zum Zugschluß durch Erkennung eines zusätzlich festgelegten Widerstandsbereiches abgibt.

11. Vorrichtung zur Steuerung einer elektropneumatischen (ep-) Bremse mit Notbremsüberbrückungseinrichtung (NBÜ) nach Anspruch 10, **dadurch gekennzeichnet, dass** ein Funktionsblock eines Übertragungssystems eine Bremssteuerleitung mit mindestens 4 Adern nach dem UIC-Merkblatt 541-5 verwendet.

12. Vorrichtung zur Steuerung einer elektropneumatischen (ep-) Bremse mit Notbremsüberbrückungseinrichtung (NBÜ) nach Anspruch 9, **dadurch gekennzeichnet, dass** die Vorrichtung für einen Funktionsblock eines Übertragungssystems mit Befehls- und Signalübertragung über die Steuerleitung mit mindestens 3 Adern für Steuerung ep-Bremse und einer zusätzlichen Ader für die Funktion NBÜ:
- eine ständige Kontrolle eines Leitungsweges auf Anliegen eines einem Befehl "ep-Bremse anlegen" und eines weiteren Leitungsweges auf Anliegen eines einem Befehl "ep-Bremse lösen" entsprechenden Signals und eine Plausibilitätsprüfung durch einen Vergleich mit einem von einer Steuerung gebildeten Status einer entsprechenden Ausgabe durchführt und bei Erkennung eines nicht plausiblen Zustandes eine Störmeldung ausgibt,
- eine Störungsmeldung bei Fehler im Übertragungssystem ausgibt,
- eine Vorrangschaltung einer Ausgabe eines Befehls "ep-Bremse anlegen" vor einem Befehl "ep-Bremse lösen" zweifach durch das Verfahren und Kontakte der Ausgabeschaltgeräte sicherstellt.

13. Vorrichtung zur Steuerung einer elektropneumatischen (ep-) Bremse mit Notbremsüberbrückungseinrichtung (NBÜ) nach Anspruch 9,
**dadurch gekennzeichnet, dass** ein Funktionsblock eines Übertragungssystems mit Befehls- und Signalübertragung 4 Adern einer IS- Leitung entsprechend UIC 558 verwendet.

14. Vorrichtung zur Steuerung einer elektropneumatischen (ep-) Bremse mit Notbremsüberbrückungseinrichtung (NBÜ) nach Anspruch 9, **dadurch gekennzeichnet, dass** die Vorrichtung für einen Funktionsblock eines Übertragungssystems mittels eines elektronischen Bussystems mindestens folgende Funktionen realisiert
- Senden von Telegrammen mit ep- und NBÜ-Befehlen an Fahrzeuge des Fahrzeugverbandes, wobei Telegramme für "ep-Bremse anlegen" Vorrang vor Telegrammen für "ep-Bremse lösen" haben,
- Überwachung einer Signalübertragung,
- Überwachung eines Zugschlusses,
- Überwachung von Fahrgastnotbremsen
- Überwachung der Wirksamkeit des NBÜ-Befehls bis zum Zugschluss.

## Claims

1. A method for the control of an electropneumatic (ep) brake with emergency brake override device (EBO) and monitoring of the transmission systems of rail-bound vehicles consisting of a vehicle rake of a leading vehicle and at least one led vehicle, wherein the number of led vehicles as well as a composition of the vehicle rake is adaptable to certain facts such as volume of passengers or route course,
**characterized in that**
- a selected operating mode is activated by means of triggered braking command,
- within the system, functions are monitored and in the event of an error, appropriate error messages are generated which trigger an aggregate message "ep-fault" and which have to be acknowledged with a braking command by a tractive unit driver,
- activation of the operating mode and resetting of the aggregate message "ep-fault" take place only if no error is detected upon output of the ep-signals,
- a plausibility test through linking of a position message of the actuation element for a driver brake valve is carried out with the appropriate requirements for "apply ep-brake" or "release ep-brake" and an actual air pressure in the brake air line,
- the brake air line is automatically filled to the set pressure predetermined by the driver brake valve through a brief filling surge command with an interruption possibility through a brake command that is triggered manually or by a safety system.

2. The method for the control of an electropneumatic (ep) brake with emergency brake override device (EBO) according to Claim 1, **characterized in that** for a function block of a transmission system via a brake control line with at least 3 cores for control ep-brake and an additional core for the functions EBO
- a continuous check of a line path for the presence of a signal corresponding to a command "apply ep-brake" and a further line path for the presence of a signal corresponding to a command "release ep-brake" and plausibility check through comparison with a status of the corresponding output formed by the control are carried out and upon detection of a non-plausible state a fault message is output,
- a message regarding a state of a conductor loop for ep-braking is issued in at least 4 stages through detection of at least 3 established resistance ranges,
- interlocked triggering of a command "apply ep-brake" takes place through a speed signal and operating mode switch as a function of the detection of a certain resistance range in an ep-brake loop,
- a priority circuit of an output of a command "apply ep-brake" over a command "release ep-brake" is ensured twice through the method and contacts of the output switchgear,
- a message concerning the state of a conductor loop for signalling passenger emergency brake and emergency brake override is issued in at least 3 stages through detection of at least 2 established resistance ranges.

3. The method for the control of an electropneumatic ep-brake with emergency brake override device (EBO) according to Claim 2, **characterized in that** for a function block of a transmission system a brake control line with at least 4 cores according to the UIC Information sheet 541-5 is used.

4. The method for the control of an electropneumatic (ep) brake with emergency brake override device (EBO) according to Claim 1, **characterized in that** for a function block of a transmission system with command and signal transmission via the control line with at least 3 cores for the control ep-brake and an additional core for the function EBO:
- a continuous check of a line path for the presence of a signal corresponding to a command "apply ep-brake" and a further line path for the presence of a signal corresponding to a command "release ep-brake" and a plausibility check are carried out through a comparison with a status of a corresponding output formed by a control and upon detection of a non-plausible state a fault message is output,
- upon a fault in the transmission system a fault message is output,
- a priority circuit of an output of a command "apply ep-brake" over a command "release ep-brake" is ensured twice through the method and contacts of the output switchgear.

5. The method for the control of an electropneumatic brake with emergency brake override device (EBO) according to any one or several of the Claims 1 to 4, **characterized in that** for a function block of a transmission system via a control line with at least 3 cores for the function EBO:
- a method emergency brake override is selected, according to which the emergency brake facility reacts differently to the actuation of a passenger emergency brake corresponding to the operational requirements during the individual phases of a train journey,
- no overriding command can be output during the phases "train halt for entry and exit" and "start following train halt for entry and exit",
- the phase "train halt for entry and exit" is determined through the sensing of the signals "release of entrance doors in train" and "speed equal zero" in the leading vehicle,
- the phase "start following train halt for entry and exit" is determined through expiration of a time determined in accordance with the acceleration capability of the train following locking of the entrance doors and speed greater zero,
- the phase train journey commences after expiry of the starting time,
- during the phase "train journey" a continuous signal "EBO" is output,
- if during the train journey no emergency brake was actuated the continuous signal "EBO" at speed below a certain value and release of the entrance doors is immediately reversed,
- emergency brakes in the train actuated during a phase "train journey" and permanently overridden through operation of the vehicle driver at speed below a certain value and release of the entrance doors become effective with a time delay,
- separate signal paths for message "PEB" and command output "EBO" are used.

6. The method for the control of an electropneumatic brake with emergency brake override device (EBO) according to Claim 3, **characterized in that** for a function block of a transmission system via a control line with at least 3 cores for the function EBO:
- when using the EBO with expanded function scope for the transmission of the overriding command the positive Core 1 and the Core 2 of the earth are supplied with 110 V DC voltage,
- upon output of the EBO command on the last car instead of the resistance mentioned in the information sheet UIC 541-5 a train rear resistance which differs from said resistance by an established amount is switched between the Cores D and 4,
- through detection of a third resistance range upon output of an EBO command its effect as far as the train rear is checked.

7. The method for the control of an electropneumatic (ep) brake with emergency brake override device (EBO) according to Claim 1, **characterized in that** for a function block of a transmission system with command and signal transmission 4 cores of an IS line corresponding to UIC 558 are used.

8. The method for the control of an electropneumatic (ep) brake with emergency brake override device (EBO) according to Claim 1, **characterized in that** for a function block of a transmission system by means of an electronic bus system at least the following functions are realized.
- sending of telegrams with ep and EBO commands to vehicles of the vehicle rake, wherein telegrams for "apply ep-brake" have priority over telegrams for "release ep-brake",
- monitoring of a signal transmission,
- monitoring of a train rear,
- monitoring of passenger emergency brakes.

9. A device for the control of an electropneumatic (ep) brake with emergency brake override device (EBO) and monitoring of the transmission systems of rail-bound vehicles consisting of a vehicle rake of a leading vehicle and at least a led vehicle, wherein the number of led vehicles as well as a composition of the vehicle rake can be adapted to certain facts such as volume of passengers or route course, **characterized in that**
- a triggered brake command activates a selected operating mode,
- the device monitors functions and in the case of an error, generates corresponding error messages which trigger an aggregate message "ep-fault" and have to be acknowledged with a braking command by a tractive unit driver,
- activation of the operating mode and resetting of the aggregate message "ep-fault" only take place when the device upon output of the ep-signals does not detect any errors,
- the device carries out a plausibility check through linking a position message of the actuation element for a driver brake valve with the corresponding requirements for "apply ep-brake" and "release ep-brake" respectively and an actual air pressure in the brake air line,
- a brief filling surge command with an interruption possibility through a braking command triggered manually or from a safety system automatically fills the brake air line to the set pressure predetermined by the driver brake valve.

10. The device for the control of an electropneumatic (ep) brake with emergency override device (EBO) according to Claim 9, **characterized in that** the device for a function block of a transmission system via a brake control line with at least 3 cores for the control ep-brake and at least one additional core for the function EBO
- carries out a continuous check of a line path for the presence of a signal corresponding to a command "apply ep-brake" and a further line path for the presence of a signal corresponding to a command "release ep-brake" and a plausibility check of the corresponding output and upon detection of a non-plausible state, issues a fault message,
- issues a message with respect to a state of a conductor loop for ep-braking in at least 4 stages through detection of at least 3 established resistance ranges,
- carries out interlocked triggering of a command "apply ep-brake" through a speed signal and operating mode switch as a function of the detection of a certain resistance range in an ep-brake loop,
- ensures a priority circuit of an output of a command "apply ep-brake" over a command "release ep-brake" twice through the method and contacts of the output switchgear,
- issues a message in respect of the state of a conductor loop for signalling passenger emergency brake and emergency brake override in at least 3 stages through detection of at least 2 established resistance ranges,
- issues a message in respect of the state of a conductor loop for signalling passenger emergency brake and emergency brake override, the effect of an EBO command as far as the train rear through detection of an additionally determined resistance range.

11. The device for the control of an electropneumatic (ep) brake with emergency brake override device (EBO) according to Claim 10, **characterized in that** a function block of a transmission system uses a brake control line with at least 4 cores according to the UIC Information sheet 541-5.

12. The device for the control of an electropneumatic (ep) brake with emergency brake override device (EBO) according to Claim 9, **characterized in that** the device for a function block of a transmission system with command and signal transmission via the control line with at least 3 cores for control of ep-brake and an additional core for the function EBO:
- carries our a continuous check of a line path for the presence of a signal corresponding to a command "apply ep-brake" and a further line path for the presence of a signal corresponding to a command "release ep-brake" and a plausibility check through a comparison with a status of a corresponding output formed by a control and upon detection of a non-plausible state issues a fault message,
- issues a fault message if there are errors in the transmission system,
- ensures a priority circuit of an output of a command "apply ep-brake" over a command "release ep-brake" twice through the method and contacts of the output switchgear.

13. The device for the control of an electropneumatic (ep) brake with emergency brake override device (EBO) according to Claim 9, **characterized in that** a function block of a transmission system with command and signal transmission 4 cores of an IS line corresponding to UIC 558 is used.

14. The device for the control of an electropneumatic (ep) brake with emergency brake override device (EBO) according to Claim 9, **characterized in that** the device for a function block of a transmission system by means of an electronic bus system realises at least the following functions
- sending of telegrams with ep and EBO commands to vehicles of the vehicle rake, wherein telegrams for "apply ep-brake" have priority over telegrams for "release ep-brake",
- monitoring of a signal transmission,
- monitoring a train rear,
- monitoring passenger emergency brakes,
- monitoring the effectiveness of the EBO command as far as the rear of the train.

## Revendications

1. Procédé de contrôle d'un frein électropneumatique (ep) au moyen d'un dispositif de neutralisation de frein d'urgence (NBÜ) et d'une surveillance des systèmes de transmission de véhicules sur rails composés d'un convoi ferroviaire constitué d'un véhicule conducteur et d'au moins un véhicule guidé, le nombre de véhicules guidés ainsi qu'une composition du convoi ferroviaire étant adaptables à certaines données comme la présence de passagers ou l'évolution du trajet, **caractérisé en ce que**
- un mode de fonctionnement sélectionné est activé par une instruction de freinage déclenchée,
- à l'intérieur du système, des fonctions sont surveillées et, en cas d'erreur, il est généré des messages d'erreur correspondants qui déclenchent un message collectif « perturbation ep » et doivent être confirmés par un conducteur de véhicule de traction par une instruction de freinage,
- l'activation du mode de fonctionnement et la réinitialisation du message collectif « perturbation ep » n'ont lieu que si, à l'émission des signaux ep, aucune erreur n'est détectée,
- un contrôle de plausibilité est réalisé par rattachement d'un message de position de l'élément d'actionnement pour une valve de freinage de conducteur aux prescriptions correspondantes pour « appliquer frein ep » ou « relâcher frein ep » et à une pression d'air réelle dans la conduite d'air de freinage,
- la conduite d'air de freinage est remplie automatiquement jusqu'à la pression théorique prescrite par la valve de freinage du conducteur par une brève instruction d'impulsion de remplissage avec une possibilité d'interruption par une instruction de freinage déclenchée manuellement ou par un système de sécurité.

2. Procédé de contrôle d'un frein électropneumatique (ep) au moyen d'un dispositif de neutralisation de frein d'urgence (NBÜ) selon la revendication 1, **caractérisé en ce que**, pour un bloc fonctionnel d'un système de transmission par une ligne de commande de frein comportant au moins 3 câbles pour commander le frein ep et un câble supplémentaire pour la fonction neutralisation de frein d'urgence,
- un contrôle constant sur un trajet conducteur de l'application d'un signal correspondant à une instruction « appliquer frein ep » et sur un autre trajet conducteur de l'application d'un signal correspondant à une instruction « relâcher frein ep » et un contrôle de plausibilité sont réalisés par comparaison avec un état établi par une commande de l'émission correspondante et, en cas de détection d'un état non plausible, un message de perturbation est émis,
- un message sur un état d'une boucle conductrice pour freins ep est émis en au moins 4 niveaux par détection d'au moins 3 zones de résistance constatées,
- un déclenchement verrouillé d'une instruction « appliquer frein ep » est assuré par le biais d'un signal de vitesse et d'un commutateur de mode de fonctionnement en fonction de la détection d'une certaine plage de résistance dans une boucle de freinage ep,
- une commutation prioritaire d'émission d'une instruction « appliquer frein ep » est assurée deux fois par le procédé et les contacts des appareils commutateurs d'émission,
- un message sur l'état d'une boucle conductrice est émis pour le message frein d'urgence pour passagers et neutralisation de frein d'urgence en au moins 3 niveaux par détection d'au moins 2 plages de résistance établies.

3. Procédé de contrôle d'un frein électropneumatique (ep) au moyen d'un dispositif de neutralisation de frein d'urgence (NBÜ) selon la revendication 2, **caractérisé en ce que**, pour un bloc fonctionnel d'un système de transmission, on emploie une ligne de commande de frein comportant au moins 4 câbles et conforme à la fiche UIC 541-5.

4. Procédé de contrôle d'un frein électropneumatique (ep) au moyen d'un dispositif de neutralisation de frein d'urgence (NBÜ) selon la revendication 1, **caractérisé en ce que**, pour un bloc fonctionnel d'un système de transmission à transmission d'instructions et de signaux par la ligne de commande comportant au moins 3 câbles pour commander le frein ep et un câble supplémentaire pour la fonction neutralisation de frein d'urgence :
- un contrôle constant sur un trajet conducteur de l'application d'un signal correspondant à une instruction « appliquer frein ep » et sur un autre trajet conducteur de l'application d'un signal correspondant à une instruction « relâcher frein ep » et un contrôle de plausibilité sont réalisés par comparaison avec un état établi par une commande d'une émission correspondante et, en cas de détection d'un état non plausible, un message de perturbation est émis,
- un message de perturbation est émis en cas d'erreur dans le système de transmission,
- une commutation prioritaire d'émission d'une instruction « appliquer frein ep » avant une instruction « relâcher frein ep » est assurée deux fois par le procédé et les contacts des appareils commutateurs d'émission.

5. Procédé de contrôle d'un frein électropneumatique au moyen d'un dispositif de neutralisation de frein d'urgence (NBÜ) selon une ou plusieurs des revendications 1 à 4, **caractérisé en ce que**, pour un bloc fonctionnel d'un système de transmission par la ligne de commande comportant au moins 3 câbles pour la fonction neutralisation de frein d'urgence :
- on sélectionne un procédé de neutralisation de frein d'urgence suivant lequel le dispositif de freinage d'urgence réagit différemment en fonction des besoins d'exploitation pendant les phases distinctes de la circulation d'un train à l'actionnement d'un frein d'urgence pour passagers,
- pendant les phases « arrêt du train pour montée et descente » et « démarrage après arrêt du train pour montée et descente », aucune instruction de neutralisation ne peut être émise,
- la phase « arrêt du train pour montée et descente » est définie par l'enregistrement des signaux « libération des portières d'accès au train » et « vitesse égale à zéro » dans le véhicule conducteur,
- la phase « démarrage après arrêt du train pour montée et descente » est définie par l'écoulement d'un temps fixé en fonction de la capacité d'accélération du train après le verrouillage des portières d'accès et une vitesse supérieure à zéro,
- la phase de circulation du train commence une fois que le temps de démarrage est écoulé,
- pendant la phase « circulation du train », un signal permanent « neutralisation du frein d'urgence (NBÜ) » est émis,
- si, pendant la circulation du train, aucun frein d'urgence n'a été actionné, le signal permanent « neutralisation du frein d'urgence (NBÜ) » est aussitôt retiré en cas d'une vitesse inférieure à une valeur définie et de libération des portières d'accès,
- les freins d'urgence actionnés pendant une phase « circulation du train » et neutralisés de manière durable par actionnement de la part du conducteur du train dans le train deviennent actifs avec un retard dans le cas d'une vitesse inférieure à une valeur définie et de libération des portières d'accès,
- des trajets de signaux séparés sont utilisés pour le message « libération de frein d'urgence (FGN) » et « neutralisation de frein d'urgence (NBÜ) ».

6. Procédé de contrôle d'un frein électropneumatique au moyen d'un dispositif de neutralisation de frein d'urgence (NBÜ) selon la revendication 3, **caractérisé en ce que**, pour un bloc fonctionnel d'un système de transmission par une ligne de commande comportant au moins 3 câbles pour la fonction neutralisation de frein d'urgence :
- en cas d'utilisation de la neutralisation de frein d'urgence à fonction étendue pour la transmission de l'instruction de neutralisation, le câble positif 1 et le câble 2 de la masse sont sollicités par une tension continue de 110 V,
- en cas d'édition de l'instruction de neutralisation de frein d'urgence dans le dernier wagon, au lieu de la résistance indiquée dans la fiche UIC 541-5, une résistance de queue de train divergeant de cette dernière à raison d'une valeur établie est commutée entre les câbles D et 4,
- en détectant une troisième plage de résistance à l'édition d'une instruction de neutralisation de frein d'urgence, son effet jusqu'à la queue de train est contrôlé.

7. Procédé de contrôle d'un frein électropneumatique (ep) au moyen d'un dispositif de neutralisation de frein d'urgence (NBÜ) selon la revendication 1, **caractérisé en ce que**, pour un bloc fonctionnel d'un système de transmission à transmission d'instructions et de signaux à 4 câbles, on utilise une ligne à circuit intégré conforme à l'UIC 558.

8. Procédé de contrôle d'un frein électropneumatique (ep) au moyen d'un dispositif de neutralisation de frein d'urgence (NBÜ) selon la revendication 1, **caractérisé en ce que**, pour un bloc fonctionnel d'un système de transmission, au moins les fonctions suivantes sont réalisées au moyen d'un système de bus électronique :
- envoi de télégrammes contenant des instructions ep et de neutralisation de frein d'urgence à des véhicules du convoi ferroviaire, les télégrammes pour « appliquer le frein ep » ayant priorité sur les télégrammes pour « relâcher le frein ep »,
- surveillance d'une transmission de signaux,
- surveillance d'une queue de train,
- surveillance des freins d'urgence pour passagers.

9. Procédé de contrôle d'un frein électropneumatique (ep) au moyen d'un dispositif de neutralisation de frein d'urgence (NBÜ) et d'une surveillance des systèmes de transmission de véhicules sur rails composés d'un convoi ferroviaire constitué d'un véhicule conducteur et d'au moins un véhicule guidé, le nombre de véhicules guidés ainsi qu'une composition du convoi ferroviaire étant adaptables à certaines données comme la présence de passagers ou l'évolution du trajet, **caractérisé en ce que**
- une instruction de freinage déclenchée active un mode de fonctionnement sélectionné,
- le dispositif surveille des fonctions et, en cas d'erreur, génère des messages d'erreur correspondants qui déclenchent un message collectif « perturbation ep » et doivent être confirmés par un conducteur de véhicule de traction par une instruction de freinage,
- l'activation du mode de fonctionnement et la réinitialisation du message collectif « perturbation ep » n'ont lieu que si le dispositif ne détecte pas d'erreur à l'émission des signaux ep,
- le dispositif réalise un contrôle de plausibilité en rattachant un message de position de l'élément d'activation pour une valve de freinage de conducteur aux prescriptions correspondantes pour « appliquer le frein ep » ou « relâcher le frein ep » et à une pression d'air réelle dans la conduite d'air de freinage,
- une brève instruction d'impulsion de remplissage avec une possibilité d'interruption par une instruction de freinage déclenchée manuellement ou par un système de sécurité remplit automatiquement la conduite d'air de freinage jusqu'à la pression théorique prescrite par la valve de freinage de conducteur.

10. Procédé de contrôle d'un frein électropneumatique (ep) au moyen d'un dispositif de neutralisation de frein d'urgence (NBÜ) selon la revendication 9, **caractérisé en ce que**, le dispositif pour un bloc fonctionnel d'un système de transmission à transmission d'instructions, par la ligne de commande de frein comportant au moins 3 câbles pour commander le frein ep et au moins un câble supplémentaire pour la fonction neutralisation de frein d'urgence,
- réalise un contrôle constant sur un trajet conducteur de l'application d'un signal correspondant à une instruction « appliquer frein ep » et sur un autre trajet conducteur de l'application d'un signal correspondant à une instruction « relâcher frein ep » et un contrôle de plausibilité par comparaison avec un état établi par la commande de l'émission correspondante et, en cas de détection d'un état non plausible, émet un message de perturbation,
- émet un message sur un état d'une boucle conductrice pour les freins ep en au moins 4 niveaux par détection d'au moins 3 plages de résistance établies,
- réalise un déclenchement verrouillé d'une instruction « appliquer frein ep » par un signal de vitesse et un commutateur de mode de fonctionnement en fonction de la détection d'une plage de résistance définie dans une boucle de freinage ep,
- assure une commutation prioritaire d'émission d'une instruction « appliquer frein ep » avant une instruction « relâcher frein ep » deux fois par le procédé et les contacts des appareils commutateurs d'émission,
- émet un message sur l'état d'une boucle conductrice pour le message frein d'urgence pour passagers et neutralisation du frein d'urgence en au moins 3 niveaux par détection d'au moins 3 plages de résistance établies,
- émet un message sur l'état d'une boucle conductrice pour le message frein d'urgence pour passagers et neutralisation de frein d'urgence et l'effet d'une instruction de neutralisation de frein d'urgence jusqu'en queue de train par détection d'une plage de résistance établie en plus.

11. Procédé de contrôle d'un frein électropneumatique (ep) au moyen d'un dispositif de neutralisation de frein d'urgence (NBÜ) selon la revendication 10, **caractérisé en ce qu'**un bloc fonctionnel d'un système de transmission utilise une ligne de commande de freinage comportant au moins 4 câbles conforme à la fiche UIC 541-5.

12. Procédé de contrôle d'un frein électropneumatique (ep) au moyen d'un dispositif de neutralisation de frein d'urgence (NBÜ) selon la revendication 9, **caractérisé en ce que** le dispositif pour un bloc fonctionnel d'un système de transmission à transmission d'instructions et de signaux, par la ligne de commande comportant au moins 3 câbles pour la commande du frein ep et un câble supplémentaire pour la fonction neutralisation de frein d'urgence :
- réalise un contrôle constant sur un trajet conducteur de l'application d'un signal correspondant à une instruction « appliquer frein ep » et sur un autre trajet conducteur de l'application d'un signal correspondant à une instruction « relâcher frein ep » et un contrôle de plausibilité par comparaison avec un état établi par une commande d'une émission correspondante et, en cas de détection d'un état non plausible, émet un message de perturbation,
- émet un message de perturbation en cas d'erreur dans le système de transmission,
- assure une commutation prioritaire d'une émission d'une instruction « appliquer frein ep » avant une instruction « relâcher frein ep » deux fois par le procédé et les contacts des appareils commutateurs d'émission.

13. Procédé de contrôle d'un frein électropneumatique (ep) au moyen d'un dispositif de neutralisation de frein d'urgence (NBÜ) selon la revendication 9, **caractérisé en ce qu'**un bloc fonctionnel d'un système de transmission à transmission d'instructions et de signaux utilise 4 câbles d'une ligne à circuit intégré conforme à l'UIC 558.

14. Procédé de contrôle d'un frein électropneumatique (ep) au moyen d'un dispositif de neutralisation de frein d'urgence (NBÜ) selon la revendication 9, **caractérisé en ce que** le dispositif pour un bloc fonctionnel d'un système de transmission réalise au moyen d'un système de bus électronique au moins les fonctions suivantes :
- envoi de télégrammes contenant des instructions ep et de neutralisation de frein d'urgence à des véhicules du convoi ferroviaire, les télégrammes pour « appliquer le frein ep » ayant priorité sur les télégrammes pour « relâcher le frein ep »,
- surveillance d'une transmission de signaux,
- surveillance d'une queue de train,
- surveillance des freins d'urgence pour passagers,
- surveillance de l'efficacité de l'instruction de neutralisation de frein d'urgence jusqu'en queue de train.
